(19) Europäisches Patentamt
European Patent Office
Office européen des brevets

(11) **EP 4 521 834 A1**

(12) **EUROPEAN PATENT APPLICATION**
published in accordance with Art. 153(4) EPC

(43) Date of publication:
**12.03.2025 Bulletin 2025/11**

(21) Application number: **23810951.6**

(22) Date of filing: **18.05.2023**

(51) International Patent Classification (IPC):
**H04W 72/04** (2023.01)

(52) Cooperative Patent Classification (CPC):
**H04W 28/16; H04W 72/04; H04W 72/0446**

(86) International application number:
**PCT/CN2023/095147**

(87) International publication number:
**WO 2023/226879 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.05.2022  CN 202210577186**

(71) Applicant: **Huawei Technologies Co., Ltd.
Shenzhen, Guangdong 518129 (CN)**

(72) Inventors:
• **QIANG, Li
Shenzhen, Guangdong 518129 (CN)**
• **LIU, Nannan
Shenzhen, Guangdong 518129 (CN)**
• **CHANG, Junren
Shenzhen, Guangdong 518129 (CN)**
• **FAN, Qiang
Shenzhen, Guangdong 518129 (CN)**

(74) Representative: **Maiwald GmbH
Engineering
Elisenhof
Elisenstrasse 3
80335 München (DE)**

(54) **COMMUNICATION METHOD AND APPARATUS**

(57)    A communication method and apparatus are provided, and relate to the field of wireless communication technologies, so that packets belonging to a same protocol data unit PDU set can be identified, to centrally send the packets in the same PDU set. The method includes: A communication device determines at least one first packet in first duration. The at least one first packet belongs to a same PDU set, the first duration is determined based on a first interval or burst duration, the first interval is a time interval at which the communication device obtains two adjacent PDU sets in time domain, and the burst duration is duration of one PDU set. Then, the communication device sends the at least one first packet.

_800_

```
┌─────────────────┐                      ┌─────────────────┐
│ Terminal device │                      │ Network device  │
└────────┬────────┘                      └────────┬────────┘
         │                                        │
┌────────┴─────────────────────────────────┐     │
│ S801: Determine at least one first packet │     │
│ in first duration, where the first        │     │
│ duration is determined based on a first   │     │
│ interval                                  │     │
└────────┬─────────────────────────────────┘     │
         │                                        │
         │       S802: At least one first packet  │
         │───────────────────────────────────────▶│
         │                                        │
```

FIG. 8a

## Description

This application claims priority to Chinese Patent Application No. 202210577186.1, filed with the China National Intellectual Property Administration on May 25, 2022 and entitled "COMMUNICATION METHOD AND APPARATUS", which is incorporated herein by reference in its entirety.

## TECHNICAL FIELD

This application relates to the field of wireless communication, and in particular, to a communication method and apparatus.

## BACKGROUND

Extended reality (extended reality, XR) is a general term of virtual reality technologies. In an XR service, a protocol data unit set (protocol data unit set, PDU set) includes service data in a video frame (frame). A transmitter device splits one PDU set into a plurality of packets (packet), and centrally schedules the packets belonging to the same PDU set, so that a receiver device can reassemble, based on received packets, a video frame corresponding to the same PDU set.
However, when the same PDU set is split into the plurality of packets, how to identify the packets belonging to the same PDU set is an urgent problem to be resolved.

## SUMMARY

This application provides a communication method and apparatus, so that packets belonging to a same PDU set can be identified, to centrally send the packets in the same PDU set. To achieve the foregoing objective, the following technical solutions are used in this application.
According to a first aspect, a communication method is provided. The method may be performed by a communication device, or may be a chip used in the communication device. The following uses an example in which the method is performed by a communication device for description. The method includes: The communication device determines at least one first packet in first duration. The at least one first packet belongs to a same protocol data unit PDU set, and the first duration is determined based on a first interval or burst duration. The first interval is a time interval at which the communication device obtains two adjacent PDU sets in time domain. The burst duration is duration of one PDU set. Then, the communication device sends the at least one first packet.
The first interval may be understood as a time interval between a 1st packet in the former PDU set and a 1st packet in the latter PDU set in the two adjacent PDU sets in time domain that are obtained by the communication device; a time interval between a 2nd packet in the former PDU set and a 2nd packet in the latter PDU set in the two adjacent PDU sets in time domain that are obtained by the communication device; or a time interval between a last packet in the former PDU set and a last packet in the latter PDU set in the two adjacent PDU sets in time domain that are obtained by the communication device.
A start moment of the burst duration may be understood as a moment at which the communication device obtains a 1st bit of a 1st packet in a PDU set. An end moment of the burst duration may be understood as a moment at which the communication device obtains a last bit of a last packet in the PDU set.
Different packets in a same PDU set appear in a burst form. Therefore, when the first duration is determined based on the first interval or the burst duration, the communication device uses the first packet in the first duration a packet in the same PDU set, and centrally sends packets in the same PDU set, so that a receiver device can receive as many packets as possible in the same PDU set, to reassemble a video frame and ensure effective transmission of service data.
In a possible design, that the communication device determines at least one first packet in first duration includes: The communication device determines the at least one first packet during running of a first timer. Running duration of the first timer is less than or equal to the first duration.
In other words, the communication device determines the first duration in a timing manner of the first timer, to learn of a specific time period in which the at least one first packet is determined.
In a possible design, the at least one first packet belongs to a first PDU set, and a sequence number SN of the first PDU set is a first value. The method further includes: The communication device starts the first timer when a first condition is met. The first condition includes at least one of the following:

    a first item: the communication device obtains a 1st packet in the first PDU set, for example, when obtaining a 1st bit of the 1st packet in the first PDU set, the communication device starts the first timer; or
    a second item: the communication device obtains a first start marker, where the first start marker indicates the communication device to start obtaining a packet in the first PDU set.

In other words, when determining that the first condition is met, the communication device starts the first timer in time, to accurately obtain the at least one first packet.

In a possible design, the method further includes: The communication device stops the first timer when a second condition is met. The second condition includes at least one of the following:

a first item: running of the first timer expires; or
a second item: the communication device obtains a first end marker, where the first end marker indicates the communication device to stop obtaining a packet in the first PDU set.

In other words, when determining that the second condition is met, the communication device stops the first timer in time, to accurately obtain the at least one first packet.

In a possible design, that the communication device sends the at least one first packet includes: The communication device sends the at least one first packet when the first timer stops running, to centrally send packets in the same PDU set.

In a possible design, that the first duration is determined based on a first interval includes: The first duration is equal to a difference between the first interval and a first adjustment factor. Alternatively, the first duration is equal to a sum of the first interval and a first adjustment factor.

In a possible design, the method further includes: The communication device determines at least one second packet during running of a second timer. Running duration of the second timer is less than or equal to the first interval, and the at least one second packet belongs to a second PDU set. Then, the communication device sends the at least one second packet, so that the communication device identifies different packets in another PDU set. The first packet and the second packet are packets in different PDU sets in a same service.

In a possible design, the method further includes: The communication device starts the second timer when a third condition is met. The third condition includes at least one of the following:

a first item: running of the first timer expires; or
a second item: the communication device obtains a second start marker, where the second start marker indicates the communication device to start obtaining a packet in the second PDU set.

In other words, when determining that the third condition is met, the communication device starts the second timer in time, to accurately obtain the at least one second packet.

In a possible design, the method further includes: The communication device stops the second timer when a fourth condition is met. The fourth condition includes at least one of the following:

a first item: running of the second timer expires; or
a second item: the communication device obtains a second end marker, where the second end marker indicates the communication device to stop obtaining a packet in the second PDU set.

In other words, when determining that the fourth condition is met, the communication device stops the second timer in time, to accurately obtain the at least one second packet.

In a possible design, the method further includes: The communication device determines an SN of the second PDU set based on the SN of the first PDU set, so that the communication device obtains the SN of the PDU set. Different packets in a same PDU set have a same SN.

In a possible design, that the communication device sends the at least one second packet includes: The communication device sends the at least one second packet when the second timer stops running, to centrally send packets in the same PDU set.

In a possible design, that the first duration is determined based on burst duration includes: The first duration is equal to a sum of the burst duration and a second adjustment factor. Alternatively, the first duration is equal to a difference between the burst duration and a second adjustment factor.

In a possible design, the method further includes: The communication device determines at least one third packet during running of a third timer. Running duration of the third timer is less than or equal to the first duration, and the at least one third packet belongs to a third PDU set. Then, the communication device sends the at least one third packet, so that the communication device identifies, based on the burst duration, a packet belonging to a same PDU set.

In a possible design, the method further includes: The communication device starts the third timer when a fifth condition is met. The fifth condition includes at least one of the following:

a first item: the communication device obtains a 1st packet in the third PDU set, for example, when obtaining a 1st bit of the 1st packet in the third PDU set, the communication device starts the third timer;

a second item: the third timer is started after the first timer, and an interval between a start moment of the third timer and a start moment of the first timer is the first interval; or

a third item: the communication device obtains a third start marker, where the third start marker indicates the communication device to start obtaining a packet in the third PDU set.

In other words, when determining that the fifth condition is met, the communication device starts the third timer in time, to accurately obtain the at least one third packet.

In a possible design, the method further includes: The communication device stops the third timer when a sixth condition is met. The sixth condition includes at least one of the following:

a first item: running of the third timer expires; or

a second item: the communication device obtains a third end marker, where the third end marker indicates the communication device to stop obtaining a packet in the third PDU set.

In other words, when determining that the sixth condition is met, the communication device stops the third timer in time, to accurately obtain the at least one third packet.

In a possible design, the method further includes: The communication device determines an SN of the third PDU set based on the SN of the first PDU set, so that the communication device obtains SNs of different PDU sets. Different packets in a same PDU set have a same SN.

In a possible design, the method further includes: When a seventh condition is met, the communication device stops determining a packet belonging to a same PDU set. The seventh condition includes at least one of the following:

a first item: a service to which the at least one first packet belongs stops, a service to which the at least one first packet belongs terminates, a service to which the at least one first packet belongs is no longer transmitted, or a service to which the at least one first packet belongs is no longer performed;

a second item: a PDU session is released;

a third item: a first quality of service QoS flow is released;

a fourth item: a data radio bearer DRB is released;

a fifth item: a network slice is not allowed to be used; or

a sixth item: a data network is not allowed to be used.

The PDU session is used by the communication device to send the at least one first packet, the first QoS flow is a QoS flow in the PDU session, the first QoS flow is used by the communication device to send the at least one first packet, the DRB is a radio bearer to which the first QoS flow is mapped, the network slice is a network slice used for the first QoS flow, and the data network is a data network associated with the first QoS flow.

In other words, when the seventh condition is met, the communication device stops, in time, determining the packet belonging to the same PDU set, to save processing resources of the communication device.

In a possible design, the method further includes: The communication device obtains a first parameter. The first parameter indicates the first duration; the first parameter includes the first interval; the first parameter includes the first interval and the first adjustment factor; the first parameter includes the burst duration; or the first parameter includes the burst duration and the second adjustment factor.

In this way, the communication device determines the first duration based on the first parameter.

In a possible design, that the communication device obtains a first parameter includes: The communication device determines the first parameter according to a user equipment route selection policy URSP; the communication device receives an access stratum AS message from an access network device, where the AS message includes the first parameter; or the communication device receives a non-access stratum NAS message from a core network device, where the NAS message includes the first parameter.

In a possible design, the method further includes: The communication device determines a PDU set type of the first PDU set based on at least one of the following:

a first item: based on a size of the first PDU set, for example, a quantity of packets corresponding to the first PDU set, a total quantity of bytes corresponding to the first PDU set, or a total quantity of bits corresponding to the first PDU set;

a second item: based on first information and an obtaining moment of the first PDU set, where the first information indicates a correspondence between a PDU set type and time at which the communication device obtains a PDU set;

a third item: based on second information and the SN of the first PDU set, where the second information indicates a correspondence between an SN of a PDU set and a PDU set type; or

a fourth item: based on received third information, where the third information indicates the PDU set type of the first PDU set.

The at least one first packet belongs to the first PDU set.

In other words, the communication device may determine the PDU set type in any one of the foregoing four manners.

In a possible design, the communication device is a terminal device, to implement uplink transmission.

In a possible design, the communication device is an access network device, to implement downlink transmission.

In a possible design, the communication device is a core network device, to implement downlink transmission.

According to a second aspect, a communication method is provided. The method may be performed by a communication device, or may be a chip used in the communication device. The following uses an example in which the method is performed by a communication device for description. The method includes: The communication device determines at least one packet. The at least one packet belongs to a same protocol data unit PDU set, and an interval between moments corresponding to two adjacent packets in the at least one packet is less than or equal to a first interval. Then, the communication device sends the at least one packet.

Because different packets in a same PDU set appear in a burst form, an interval between moments corresponding to adjacent packets in the same PDU set is less than or equal to the first interval. If moments corresponding to adjacent packet are greater than the first interval, it means that the two packets belong to different PDU sets. Therefore, if the interval between the moments corresponding to the two adjacent packets is less than or equal to the first interval, the communication device considers the two adjacent packets a packet in the same PDU set, and then centrally sends the at least one packet in the same PDU set, so that a receiver device can receive as many packets as possible in the same PDU set, to reassemble a video frame and ensure effective transmission of service data.

In a possible design, the first interval is a time interval at which the communication device obtains two adjacent packets in a same PDU set in time domain.

In a possible design, the method further includes: The communication device starts a first timer when the communication device obtains a first packet. The at least one packet includes at least the first packet. That the communication device sends the at least one packet includes: The communication device sends the first packet when the first timer stops running. Running duration of the first timer is less than or equal to the first interval.

In other words, when receiving the first packet, the communication device starts the first timer, and the communication device fails to receive a next packet until the first timer expires. This means that the PDU set includes at least the first packet, to implement a function of identifying different packets in the same PDU set. When the first timer stops running, the communication device sends the packet in the PDU set, to implement a function of centrally sending the different packets in the same PDU set.

In a possible design, the method further includes: The communication device stops the first timer when the communication device obtains an end marker. The end marker indicates the communication device to stop obtaining a packet in the PDU set to which the first packet belongs, so that the communication device accurately determines the packet in the PDU set to which the first packet belongs.

In a possible design, the method further includes: The communication device starts a second timer when the first timer stops running. That the communication device sends the first packet when the first timer stops running includes: The communication device sends the first packet when the first timer stops running and the second timer stops running, to centrally send the different packets in the same PDU set and also prevent a missed packet in the same PDU set.

In a possible design, that the communication device sends the first packet when the first timer stops running and the second timer stops running includes: The communication device sends the first packet and a second packet when the first timer stops running and the second timer stops running. The second packet is a packet determined by the communication device when the second timer runs, and the second packet and the first packet belong to the same PDU set.

In other words, the communication device starts the first timer when receiving the first packet. When running of the first timer expires, the communication device starts the second timer. During running of the second timer, the communication device obtains the missed second packet. This means that the PDU set includes at least the first packet and the second packet, to implement the function of identifying the different packets in the same PDU set. When the first timer and the second timer stop running, the communication device sends the packet in the PDU set, to centrally send the different packets in the same PDU set.

In a possible design, the method further includes: The communication device stops the second timer when a first condition is met. The first condition includes at least one of the following:

> a first item: running duration of the second timer is equal to the first interval;
> a second item: running duration of the second timer is equal to jitter duration;
> a third item: running duration of the second timer is equal to preset duration, where the preset duration may be equal to half of the jitter duration or another duration parameter; or
> a fourth item: the communication device obtains an end marker, where the end marker indicates the communication device to stop obtaining a packet in the PDU set to which the first packet belongs.

In other words, when determining that the first condition is met, the communication device stops the second timer in time, so that the communication device can accurately determine the different packets belonging to the same PDU set.

In a possible design, the method further includes: The communication device restarts the first timer at a third moment. The third moment is a moment at which the communication device determines a third packet, and the third packet and the first packet belong to the same PDU set. That the communication device sends the first packet when the first timer stops running includes: The communication device sends the first packet and the third packet when the restarted first timer stops running.

In other words, the communication device starts the first timer when receiving the first packet. If obtaining the third packet during running of the first timer, the communication device restarts the first timer. When running of the first timer expires, it means that the PDU set includes at least the first packet and the third packet, to implement the function of identifying the different packets in the same PDU set. When the first timer stops running, the communication device sends the packet in the PDU set, to implement the function of centrally sending the different packets in the same PDU set.

In a possible design, the method further includes: The communication device starts a third timer when the restarted first timer stops running. That the communication device sends the first packet and the third packet when the restarted first timer stops running includes: The communication device sends the first packet and the third packet when the restarted first timer stops running and the third timer stops running, to centrally send the different packets in the same PDU set and also prevent the missed packet in the same PDU set.

In a possible design, that the communication device sends the first packet and the third packet when the restarted first timer stops running and the third timer stops running includes: The communication device sends the first packet, the third packet, and a fourth packet when the restarted first timer stops running and the third timer stops running. The fourth packet is a packet determined by the communication device when the third timer runs, and the fourth packet and the first packet belong to the same PDU set.

In other words, during running of the second timer, the communication device obtains the missed fourth packet. This means that the PDU set includes at least the first packet, the third packet, and the fourth packet, to implement the function of identifying the different packets in the same PDU set. When the third timer and the restarted first timer stop running, the communication device sends the packet in the PDU set, to centrally send the different packets in the same PDU set.

In a possible design, the method further includes: The communication device stops the third timer when a second condition is met. The second condition includes at least one of the following:

a first item: running duration of the third timer is equal to the first interval;
a second item: running duration of the third timer is equal to jitter duration;
a third item: running duration of the third timer is equal to preset duration, where the preset duration may be equal to half of the jitter duration or another duration parameter; or
a fourth item: the communication device obtains an end marker, where the end marker indicates the communication device to stop obtaining a packet in the PDU set to which the first packet belongs.

In other words, when determining that the second condition is met, the communication device stops the third timer in time, so that the communication device can accurately determine the different packets belonging to the same PDU set.

In a possible design, the method further includes: The communication device stops the first timer when the running duration of the first timer is equal to the first interval, so that the communication device can accurately determine the different packets belonging to the same PDU set.

In a possible design, the first packet includes at least one of the following:

a first item: a start marker, where the start marker indicates the communication device to start obtaining a packet in the PDU set to which the first packet belongs, and in other words, the first packet is a marker packet that carries the start marker; or
a second item: service data, where the service data is data of a service to which the first packet belongs, and in other words, the first packet is a service packet that carries user plane data.

In a possible design, the method further includes: The communication device determines a sequence number SN of the first PDU set. The first PDU set is a PDU set to which the at least one packet belongs, so that the communication device learns of the SN of the first PDU set.

In a possible design, that the communication device determines a sequence number SN of the first PDU set includes: The communication device determines the SN of the first PDU set based on an SN of a second PDU set. The second PDU set is adjacent to the first PDU set in time domain, and the second PDU set is before the first PDU set.

In other words, for two adjacent PDU sets in time domain, the communication device can determine an SN of the latter PDU set based on an SN of the former PDU set.

In a possible design, the method further includes: When a seventh condition is met, the communication device stops determining a packet belonging to a same PDU set. The seventh condition includes at least one of the following:

a first item: a service to which the at least one first packet belongs stops, a service to which the at least one first packet belongs terminates, a service to which the at least one first packet belongs is no longer transmitted, or a service to which the at least one first packet belongs is no longer performed;
a second item: a PDU session is released;
a third item: a first quality of service QoS flow is released;
a fourth item: a data radio bearer DRB is released;
a fifth item: a network slice is not allowed to be used; or
a sixth item: a data network is not allowed to be used.

The PDU session is used by the communication device to send the at least one first packet, the first QoS flow is a QoS flow in the PDU session, the first QoS flow is used by the communication device to send the at least one first packet, the DRB is a radio bearer to which the first QoS flow is mapped, the network slice is a network slice used for the first QoS flow, and the data network is a data network associated with the first QoS flow.

In other words, when the seventh condition is met, the communication device stops, in time, determining the packet belonging to the same PDU set, to save processing resources of the communication device.

In a possible design, the method further includes: The communication device obtains a first parameter. The first parameter indicates first duration; the first parameter includes the first interval; the first parameter includes the first interval and a first adjustment factor; the first parameter includes burst duration; or the first parameter includes burst duration and a second adjustment factor.

In this way, the communication device determines the first duration based on the first parameter.

In a possible design, that the communication device obtains a first parameter includes: The communication device determines the first parameter according to a user equipment route selection policy URSP; the communication device receives an access stratum AS message from an access network device, where the AS message includes the first parameter; or the communication device receives a non-access stratum NAS message from a core network device, where the NAS message includes the first parameter.

In a possible design, the method further includes: The communication device determines a PDU set type of the first PDU set based on at least one of the following:

a first item: based on a size of the first PDU set, for example, a quantity of packets corresponding to the first PDU set, a total quantity of bytes corresponding to the first PDU set, or a total quantity of bits corresponding to the first PDU set;
a second item: based on first information and an obtaining moment of the first PDU set, where the first information indicates a correspondence between a PDU set type and time at which the communication device obtains a PDU set;
a third item: based on second information and the SN of the first PDU set, where the second information indicates a correspondence between an SN of a PDU set and a PDU set type; or
a fourth item: based on received third information, where the third information indicates the PDU set type of the first PDU set.

The at least one first packet belongs to the first PDU set.

In other words, the communication device may determine the PDU set type in any one of the foregoing four manners.

In a possible design, the communication device is a terminal device, to implement uplink transmission.

In a possible design, the communication device is an access network device, to implement downlink transmission.

In a possible design, the communication device is a core network device, to implement downlink transmission.

According to a third aspect, a communication apparatus is provided. The communication apparatus may be the communication device according to any one of the first aspect or the possible designs of the first aspect, or a chip that implements a function of the communication device. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing function.

The communication apparatus includes a processing unit and a sending unit. The processing unit is configured to determine at least one first packet in first duration. The at least one first packet belongs to a same protocol data unit PDU set, and the first duration is determined based on a first interval or burst duration. The first interval is a time interval at which the communication apparatus obtains two adjacent PDU sets in time domain. The burst duration is duration of one PDU set. The sending unit is configured to send the at least one first packet.

In a possible design, that the processing unit is configured to determine at least one first packet in first duration includes: determining the at least one first packet during running of a first timer. Running duration of the first timer is less than or equal to the first duration.

In a possible design, the at least one first packet belongs to a first PDU set, and a sequence number SN of the first PDU set is a first value. The processing unit is further configured to start the first timer when a first condition is met. The first condition includes at least one of the following:

a first item: the communication apparatus obtains a 1st packet in the first PDU set; or
a second item: the communication apparatus obtains a first start marker, where the first start marker indicates the communication apparatus to start obtaining a packet in the first PDU set.

In a possible design, the processing unit is further configured to stop the first timer when a second condition is met. The second condition includes at least one of the following:

a first item: running of the first timer expires; or
a second item: the communication apparatus obtains a first end marker, where the first end marker indicates the communication apparatus to stop obtaining a packet in the first PDU set.

In a possible design, that the sending unit is configured to send the at least one first packet includes: sending the at least one first packet when the first timer stops running.

In a possible design, that the first duration is determined based on a first interval includes: The first duration is equal to a difference between the first interval and a first adjustment factor. Alternatively, the first duration is equal to a sum of the first interval and a first adjustment factor.

In a possible design, the processing unit is further configured to determine at least one second packet during running of a second timer. Running duration of the second timer is less than or equal to the first interval, and the at least one second packet belongs to a second PDU set. The sending unit is further configured to send the at least one second packet.

In a possible design, the processing unit is further configured to start the second timer when a third condition is met. The third condition includes at least one of the following:

a first item: running of the first timer expires; or
a second item: the communication apparatus obtains a second start marker, where the second start marker indicates the communication apparatus to start obtaining a packet in the second PDU set.

In a possible design, the processing unit is further configured to stop the second timer when a fourth condition is met. The fourth condition includes at least one of the following:

a first item: running of the second timer expires; or
a second item: the communication apparatus obtains a second end marker, where the second end marker indicates the communication apparatus to stop obtaining a packet in the second PDU set.

In a possible design, the processing unit is further configured to determine an SN of the second PDU set based on the SN of the first PDU set.

In a possible design, that the sending unit is configured to send the at least one second packet includes: sending the at least one second packet when the second timer stops running.

In a possible design, that the first duration is determined based on burst duration includes: The first duration is equal to a sum of the burst duration and a second adjustment factor. Alternatively, the first duration is equal to a difference between the burst duration and a second adjustment factor.

In a possible design, the processing unit is further configured to determine at least one third packet during running of a third timer. Running duration of the third timer is less than or equal to the first duration, and the at least one third packet belongs to a third PDU set. The sending unit is further configured to send the at least one third packet.

In a possible design, the processing unit is further configured to start the third timer when a fifth condition is met. The fifth condition includes at least one of the following:

a first item: the communication apparatus obtains a 1st packet in the third PDU set;
a second item: the third timer is started after the first timer, and an interval between a start moment of the third timer and a start moment of the first timer is the first interval; or

a third item: the communication apparatus obtains a third start marker, where the third start marker indicates the communication apparatus to start obtaining a packet in the third PDU set.

In a possible design, the processing unit is further configured to stop the third timer when a sixth condition is met. The sixth condition includes at least one of the following:

a first item: running of the third timer expires; or
a second item: the communication apparatus obtains a third end marker, where the third end marker indicates the communication apparatus to stop obtaining a packet in the third PDU set.

In a possible design, the processing unit is further configured to determine an SN of the third PDU set based on the SN of the first PDU set.
In a possible design, the processing unit is further configured to: when a seventh condition is met, stop determining a packet belonging to a same PDU set. The seventh condition includes at least one of the following:

a first item: a service to which the at least one first packet belongs stops, a service to which the at least one first packet belongs terminates, a service to which the at least one first packet belongs is no longer transmitted, or a service to which the at least one first packet belongs is no longer performed;
a second item: a PDU session is released;
a third item: a first quality of service QoS flow is released;
a fourth item: a data radio bearer DRB is released;
a fifth item: a network slice is not allowed to be used; or
a sixth item: a data network is not allowed to be used.

The PDU session is used by the communication apparatus to send the at least one first packet, the first QoS flow is a QoS flow in the PDU session, the first QoS flow is used by the communication apparatus to send the at least one first packet, the DRB is a radio bearer to which the first QoS flow is mapped, the network slice is a network slice used for the first QoS flow, and the data network is a data network associated with the first QoS flow.
In a possible design, the processing unit is further configured to obtain a first parameter. The first parameter indicates the first duration; the first parameter includes the first interval; the first parameter includes the first interval and the first adjustment factor; the first parameter includes the burst duration; or the first parameter includes the burst duration and the second adjustment factor.
In a possible design, that the processing unit is configured to obtain a first parameter includes: determining the first parameter according to a user equipment route selection policy URSP. The processing unit receives an access stratum AS message from an access network device through a receiving unit, where the AS message includes the first parameter. Alternatively, the processing unit receives a non-access stratum NAS message from a core network device through a receiving unit, where the NAS message includes the first parameter. The communication apparatus further includes the receiving unit.
In a possible design, the processing unit is further configured to determine a PDU set type of the first PDU set based on at least one of the following:

a first item: based on a size of the first PDU set, for example, a quantity of packets corresponding to the first PDU set, a total quantity of bytes corresponding to the first PDU set, or a total quantity of bits corresponding to the first PDU set;
a second item: based on first information and an obtaining moment of the first PDU set, where the first information indicates a correspondence between a PDU set type and time at which the communication apparatus obtains a PDU set;
a third item: based on second information and the SN of the first PDU set, where the second information indicates a correspondence between an SN of a PDU set and a PDU set type; or
a fourth item: based on received third information, where the third information indicates the PDU set type of the first PDU set.

The at least one first packet belongs to the first PDU set.
In a possible design, the communication apparatus is a terminal device.
In a possible design, the communication apparatus is an access network device.
In a possible design, the communication apparatus is a core network device.
According to a fourth aspect, a communication apparatus is provided. The communication apparatus may be the communication device according to any one of the second aspect or the possible designs of the second aspect, or a chip that implements a function of the communication device. The communication apparatus includes a corresponding module, unit, or means (means) for implementing the foregoing method. The module, the unit, or the means may be implemented by hardware, software, or hardware executing corresponding software. The hardware or the software includes one or more modules or units corresponding to the foregoing function.

The communication apparatus includes a processing unit and a sending unit. The processing unit is configured to determine at least one packet. The at least one packet belongs to a same protocol data unit PDU set, and an interval between moments corresponding to two adjacent packets in the at least one packet is less than or equal to a first interval. The sending unit is configured to send the at least one packet.

In a possible design, the first interval is a time interval at which the communication apparatus obtains two adjacent packets in a same PDU set in time domain.

In a possible design, the processing unit is further configured to start a first timer when a first packet is obtained. The at least one packet includes at least the first packet. That the sending unit is configured to send the at least one packet includes: sending the first packet when the first timer stops running. Running duration of the first timer is less than or equal to the first interval.

In a possible design, the processing unit is further configured to stop the first timer when an end marker is obtained. The end marker indicates the communication apparatus to stop obtaining a packet in the PDU set to which the first packet belongs.

In a possible design, the processing unit is further configured to start a second timer when the first timer stops running. That the sending unit is configured to send the first packet when the first timer stops running includes: sending the first packet when the first timer stops running and the second timer stops running.

In a possible design, that the sending unit is configured to send the first packet when the first timer stops running and the second timer stops running includes: sending the first packet and a second packet when the first timer stops running and the second timer stops running. The second packet is a packet determined by the communication apparatus when the second timer runs, and the second packet and the first packet belong to the same PDU set.

In a possible design, the processing unit is further configured to stop the second timer when a first condition is met. The first condition includes at least one of the following:

  a first item: running duration of the second timer is equal to the first interval;
  a second item: running duration of the second timer is equal to jitter duration;
  a third item: running duration of the second timer is equal to preset duration; or
  a fourth item: the communication apparatus obtains an end marker, where the end marker indicates the communication apparatus to stop obtaining a packet in the PDU set to which the first packet belongs.

In a possible design, the processing unit is further configured to restart the first timer at a third moment. The third moment is a moment at which the communication apparatus determines a third packet, and the third packet and the first packet belong to the same PDU set. That the sending unit is configured to send the first packet when the first timer stops running includes: sending the first packet and the third packet when the restarted first timer stops running.

In a possible design, the processing unit is further configured to start a third timer when the restarted first timer stops running. That the sending unit is configured to send the first packet and the third packet when the restarted first timer stops running includes: sending the first packet and the third packet when the restarted first timer stops running and the third timer stops running.

In a possible design, that the sending unit is configured to send the first packet and the third packet when the restarted first timer stops running and the third timer stops running includes: sending the first packet, the third packet, and a fourth packet when the restarted first timer stops running and the third timer stops running. The fourth packet is a packet determined by the communication apparatus when the third timer runs, and the fourth packet and the first packet belong to the same PDU set.

In a possible design, the processing unit is further configured to stop the third timer when a second condition is met. The second condition includes at least one of the following:

  a first item: running duration of the third timer is equal to the first interval;
  a second item: running duration of the third timer is equal to jitter duration;
  a third item: running duration of the third timer is equal to preset duration; or
  a fourth item: the communication apparatus obtains an end marker, where the end marker indicates the communication apparatus to stop obtaining a packet in the PDU set to which the first packet belongs.

In a possible design, the processing unit is further configured to stop the first timer when the running duration of the first timer is equal to the first interval.

In a possible design, the first packet includes at least one of the following:

a first item: a start marker, where the start marker indicates the communication apparatus to start obtaining a packet in the PDU set to which the first packet belongs, and in other words, the first packet is a marker packet that carries the start marker; or

a second item: service data, where the service data is data of a service to which the first packet belongs, and in other words, the first packet is a service packet that carries user plane data.

In a possible design, the processing unit is further configured to determine a sequence number SN of the first PDU set. The first PDU set is a PDU set to which the at least one packet belongs.

In a possible design, that the processing unit is configured to determine a sequence number SN of the first PDU set includes: determining the SN of the first PDU set based on an SN of a second PDU set. The second PDU set is adjacent to the first PDU set in time domain, and the second PDU set is before the first PDU set.

In a possible design, the processing unit is further configured to: when a seventh condition is met, stop determining a packet belonging to a same PDU set. The seventh condition includes at least one of the following:

a first item: a service to which the at least one first packet belongs stops, a service to which the at least one first packet belongs terminates, a service to which the at least one first packet belongs is no longer transmitted, or a service to which the at least one first packet belongs is no longer performed;

a second item: a PDU session is released;

a third item: a first quality of service QoS flow is released;

a fourth item: a data radio bearer DRB is released;

a fifth item: a network slice is not allowed to be used; or

a sixth item: a data network is not allowed to be used.

The PDU session is used by the communication apparatus to send the at least one first packet, the first QoS flow is a QoS flow in the PDU session, the first QoS flow is used by the communication apparatus to send the at least one first packet, the DRB is a radio bearer to which the first QoS flow is mapped, the network slice is a network slice used for the first QoS flow, and the data network is a data network associated with the first QoS flow.

In a possible design, the processing unit is further configured to obtain a first parameter. The first parameter indicates first duration; the first parameter includes the first interval; the first parameter includes the first interval and a first adjustment factor; the first parameter includes burst duration; or the first parameter includes burst duration and a second adjustment factor.

In a possible design, that the processing unit is configured to obtain a first parameter includes: determining the first parameter according to a user equipment route selection policy URSP. Alternatively, the processing unit receives an access stratum AS message from an access network device through a receiving unit, where the AS message includes the first parameter. Alternatively, the processing unit receives a non-access stratum NAS message from a core network device through a receiving unit, where the NAS message includes the first parameter. The communication apparatus further includes the receiving unit.

In a possible design, the processing unit is further configured to determine a PDU set type of the first PDU set based on at least one of the following:

a first item: based on a size of the first PDU set, for example, a quantity of packets corresponding to the first PDU set, a total quantity of bytes corresponding to the first PDU set, or a total quantity of bits corresponding to the first PDU set;

a second item: based on first information and an obtaining moment of the first PDU set, where the first information indicates a correspondence between a PDU set type and time at which the communication apparatus obtains a PDU set;

a third item: based on second information and the SN of the first PDU set, where the second information indicates a correspondence between an SN of a PDU set and a PDU set type; or

a fourth item: based on received third information, where the third information indicates the PDU set type of the first PDU set.

The at least one first packet belongs to the first PDU set.

In a possible design, the communication apparatus is a terminal device.

In a possible design, the communication apparatus is an access network device.

In a possible design, the communication apparatus is a core network device.

According to a fifth aspect, a communication apparatus is provided. The communication apparatus includes a processor and a memory. The memory is configured to store computer instructions. When the processor executes the instructions, the communication apparatus is enabled to perform the method performed by the communication device according to any one of the foregoing aspects or the possible designs of the foregoing aspects. The communication apparatus may be the communication device according to any one of the first aspect or the possible designs of the first aspect, the communication apparatus may be the communication device according to any one of the second aspect or the possible designs of the second aspect, or a chip that implements a function of the communication device.

According to a sixth aspect, a communication apparatus is provided. The communication apparatus includes a processor. The processor is coupled to a memory, and is configured to read and execute instructions in the memory, to enable the communication apparatus to perform the method performed by the communication device according to any one of the foregoing aspects or the possible designs of the foregoing aspects. The communication apparatus may be the communication device according to any one of the first aspect or the possible designs of the first aspect, the communication apparatus may be the communication device according to any one of the second aspect or the possible designs of the second aspect, or a chip that implements a function of the communication device.

According to a seventh aspect, a chip is provided. The chip includes a processing circuit and an input/output interface. The input/output interface is configured to communicate with a module other than the chip. For example, the chip may be a chip that implements a function of the communication device according to any one of the first aspect or the possible designs of the first aspect. The processing circuit is configured to run a computer program or instructions, to implement the method according to any one of the first aspect or the possible designs of the first aspect. For another example, the chip may be a chip that implements a function of the communication device according to any one of the second aspect or the possible designs of the second aspect. The processing circuit is configured to run a computer program or instructions, to implement the method according to any one of the second aspect or the possible designs of the second aspect.

According to an eighth aspect, a computer-readable storage medium is provided. The computer-readable storage medium stores instructions. When the instructions are run on a computer, the computer is enabled to perform the method according to any one of the foregoing aspects.

According to a ninth aspect, a computer program product including instructions is provided. When the computer program product runs on a computer, the computer is enabled to perform the method according to any one of the foregoing aspects.

According to a tenth aspect, a circuit system is provided. The circuit system includes a processing circuit, and the processing circuit is configured to perform the method according to any one of the foregoing aspects.

For technical effects of any one of the designs of the third aspect to the tenth aspect, refer to the beneficial effects in the corresponding methods provided above. Details are not described herein again.

## BRIEF DESCRIPTION OF DRAWINGS

FIG. 1 is a diagram of an architecture of a communication system to which embodiments of this application are applied;
FIG. 2 is a diagram of an architecture of a terminal device to which embodiments of this application are applied;
FIG. 3 is a diagram of layers in an application processor according to an embodiment of this application;
FIG. 4 is a diagram of layers of a communication protocol according to an embodiment of this application;
FIG. 5 is a diagram of an architecture of another terminal device according to an embodiment of this application;
FIG. 6 is a diagram of a quality of service flow model according to an embodiment of this application;
FIG. 7a is a diagram of a packet transmission scenario according to an embodiment of this application;
FIG. 7b is a diagram of a structure of a packet according to an embodiment of this application;
FIG. 8a is a schematic flowchart of a communication method according to an embodiment of this application;
FIG. 8b is a diagram of another packet transmission scenario according to an embodiment of this application;
FIG. 9 is a schematic flowchart of another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a schematic flowchart of still another communication method according to an embodiment of this application;
FIG. 13 is a schematic flowchart of still another communication method according to an embodiment of this application;
FIG. 14 is a schematic flowchart of still another communication method according to an embodiment of this application;
FIG. 15 is a schematic flowchart of still another communication method according to an embodiment of this application;
FIG. 16a is a schematic flowchart of still another communication method according to an embodiment of this application;

FIG. 16b is a schematic flowchart of still another communication method according to an embodiment of this application;

FIG. 17a is a schematic flowchart of still another communication method according to an embodiment of this application;

FIG. 17b is a diagram of still another packet transmission scenario according to an embodiment of this application;

FIG. 18 is a schematic flowchart of still another communication method according to an embodiment of this application;

FIG. 19 is a schematic flowchart of still another communication method according to an embodiment of this application;

FIG. 20a is a schematic flowchart of still another communication method according to an embodiment of this application;

FIG. 20b is a diagram of still another packet transmission scenario according to an embodiment of this application;

FIG. 21 is a schematic flowchart of still another communication method according to an embodiment of this application;

FIG. 22 is a schematic flowchart of still another communication method according to an embodiment of this application;

FIG. 23 is a schematic flowchart of still another communication method according to an embodiment of this application;

FIG. 24 is a schematic flowchart of still another communication method according to an embodiment of this application;

FIG. 25 is a schematic flowchart of still another communication method according to an embodiment of this application;

FIG. 26 is a schematic flowchart of still another communication method according to an embodiment of this application;

FIG. 27 is a schematic flowchart of still another communication method according to an embodiment of this application;

FIG. 28 is a diagram of still another packet transmission scenario according to an embodiment of this application;

FIG. 29 is a diagram of a structure of a communication apparatus according to an embodiment of this application; and

FIG. 30 is a diagram of a structure of another communication apparatus according to an embodiment of this application.

## DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that, in embodiments of this application, the term such as "example" or "for example" is used to represent giving an example, an illustration, or descriptions. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner. In embodiments of this application, "more than two" includes two. A plurality may include two, may include three, or may include more. A network and a system have a same meaning, and may be replaced with each other in embodiments of this application. For example, a 5th generation (5th generation, 5G) system may be replaced with a 5G network.

The technical solutions in embodiments of this application may be applied to various communication systems, for example, a 4th generation (4th generation, 4G) system, various systems evolved based on the 4G system, a 5G system, and various systems evolved based on the 5G system. The 4G system may also be referred to as an evolved packet system (evolved packet system, EPS). A core network of the 4G system may be referred to as an evolved packet core (evolved packet core, EPC) network, and an access network may be referred to as long term evolution (long term evolution, LTE). A core network of the 5G system may be referred to as a 5GC (5G core), and an access network may be referred to as new radio (new radio, NR). The technical solutions provided in this application may be further applied to a future communication system, for example, a 6th generation mobile communication system. The technical solutions in embodiments of this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, and an internet of things (internet of things, IoT) communication system, or another communication system.

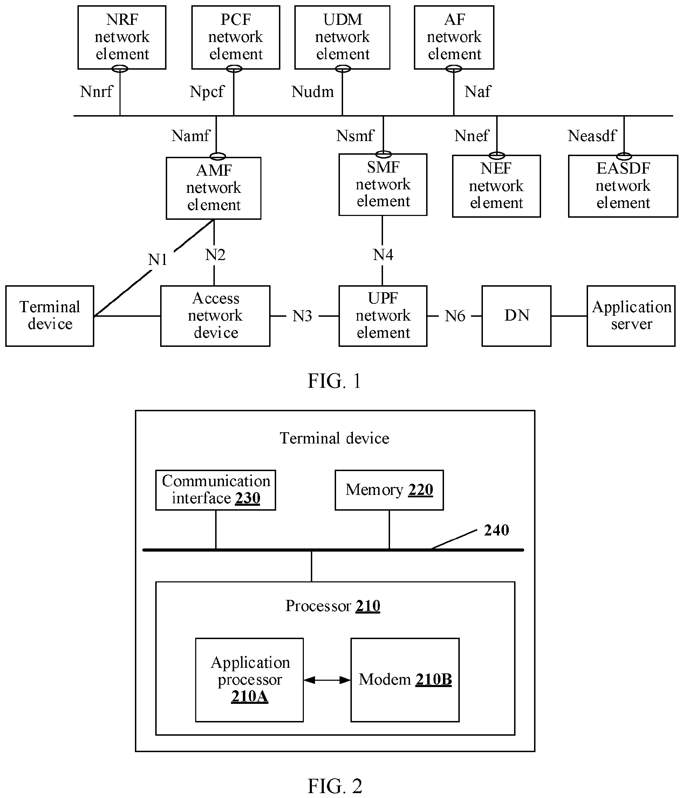

For ease of understanding, a communication system to which embodiments of this application are applied is briefly described first with reference to FIG. 1.

As an example for description, FIG. 1 is a diagram of an architecture of a 5G system to which embodiments of this application are applied. FIG. 1 shows an example of the diagram of the network architecture of the 5G system. The network architecture may further include but is not limited to the following network elements: an access network (access network, AN) device, a user plane function (user plane function, UPF) network element, a data network (data network, DN), an application server (application server, AS), an access and mobility management function (access and mobility management function, AMF) network element, a session management function (session management function, SMF) network element, a network exposure function (network exposure function, NEF) network element, an edge application server discovery function (edge application server discovery function, EASDF) network element introduced in edge computing, a network repository function (network repository function, NRF) network element, a policy control function (policy control function, PCF) network element, a unified data management (unified data management, UDM) network element, an application function (application function, AF) network element, and the like.

It should be noted that the access network device, the UPF network element, the application server, the AMF network element, the SMF network element, the NEF network element, the EASDF network element, the NRF network element, the PCF network element, the UDM network element, the AF network element, and the like in FIG. 1 are merely names, and the names constitute no limitation on the network elements. In the 5G network and another future network, entities or devices corresponding to these network elements may have other names. This is not specifically limited in embodiments of this application.

For example, the UDM network element may alternatively be replaced with a home subscriber server (home subscriber server, HSS), a user subscription database (user subscription database, USD), a database network element, or the like. Unified descriptions are provided herein and details are not described below again.

Functions of some network elements in FIG. 1 are as follows.

The UPF network element mainly includes the following user plane-related functions: data packet routing and transmission, packet detection, service usage reporting, quality of service (quality of service, QoS) processing, lawful interception, uplink packet detection, downlink data packet storage, and the like.

The data network is an operator network that provides a data transmission service for a terminal device, for example, the internet (internet) or an internet protocol multimedia subsystem (internet protocol multimedia subsystem, IMS).

The application server is mainly configured to run at least one application, to process service data of an extended reality (extended reality, XR) service. An application running on the application server may also be referred to as an "application instance", and is specifically a server application program, for example, an instance (instance) that is run on an edge data network and that is deployed by XR such as augmented reality (augmented reality, AR) or virtual reality (virtual reality, VR).

The AMF network element mainly includes the following functions related to access and mobility: connection management, mobility management, registration management, access authentication and authorization, reachability management, security context management, and the like.

The SMF network element is mainly configured to manage a session, allocate and manage an internet protocol (internet protocol, IP) address of a terminal device, select an endpoint that can manage a user plane function interface and a policy control and charging function interface, notify downlink data, and so on.

The NEF network element mainly includes the following functions: secure exposure of a service and a capability provided by a 3rd generation partnership project (3rd generation partnership project, 3GPP) network function; and conversion or translation of information exchanged with the AF network element and information exchanged with an internal network function, for example, a service identifier of the AF network element and internal 5G core network information such as a data network name (data network name, DNN) and single network slice selection assistance information (single network slice selection assistance information, S-NSSAI).

The EASDF network element is mainly responsible for discovering an EAS network element, processing a domain name system (domain name system, DNS) message, terminating DNS security, and the like based on an indication of the SMF network element.

The NRF network element mainly includes the following functions: a service discovery function, an NF (network function, NF) text for maintaining an available network function instance, and a service supported by the NRF network element.

The PCF network element is a unified policy framework for guiding network behavior, and provides policy rule information and the like for a control plane function network element such as the AMF network element or the SMF network element.

The UDM network element mainly includes the following functions: unified data management, support for authentication credential processing in a 3GPP authentication and key agreement mechanism, user identity processing, access authorization, registration and mobility management, subscription management, messaging management, and the like.

The AF network element is configured to perform data routing of an application and provide application layer information, and may interact with a policy framework via the NEF network element, or directly interact with the policy framework to perform policy decision request control, and the like.

In the network architecture shown in FIG. 1, the network elements may communicate with each other through interfaces shown in the figure, and some interfaces may be implemented in a manner of non-service-based interfaces. As shown in FIG. 1, the terminal device and the AMF network element may interact with each other through an N1 interface. An interaction message may be referred to as, for example, an N1 message (N1 Message). The access network device and the AMF network element may interact with each other through an N2 interface. The N2 interface may be configured to send a non-access stratum (non-access stratum, NAS) message and the like. The access network device and the UPF network element may interact with each other through an N3 interface. The N3 interface may be configured to transmit user plane data and the like. The SMF network element and the UPF network element may interact with each other through an N4 interface. The N4 interface may be configured to transmit information such as tunnel identifier information of an N3 connection, data buffering indication information, and a downlink data notification message. The UPF network element and the application server may interact with each other through an N6 interface. The N6 interface may be configured to transmit user plane data and the like.

In addition, network elements of a control plane function in FIG. 1 may alternatively communicate with each other through a service-based interface. For example, the AMF network element accesses a service-based architecture through an Namf interface, and provides a corresponding service; and the SMF network element accesses the service-based architecture through an Nsmf interface, and provides a corresponding service. Similarly, the NEF network element, the EASDF network element, the NRF network element, the PCF network element, the UDM network element, and the AF network element access the service-based architecture through respective corresponding interfaces, and provide corresponding services. Details are not described herein. Relationships between other interfaces and network elements are shown in FIG. 1. For brevity, details are not described herein.

It should be understood that the network architecture to which embodiments of this application can be applied is merely an example for description, and the network architecture to which embodiments of this application are applied is not limited thereto. Embodiments of this application are applied to any network architecture that can implement functions of the foregoing network elements.

It should be further understood that the AMF network element, the SMF network element, the UPF network element, the PCF network element, and the like shown in FIG. 1 may be understood as network elements configured to implement different functions, for example, may be combined into a network slice as required. These network elements may be independent devices, may be integrated into a same device to implement different functions, may be network elements in a hardware device, may be software functions running on dedicated hardware, or may be virtualized functions instantiated on a platform (for example, a cloud platform). Specific forms of the network elements are not limited in this application.

It should be further understood that the names are defined merely for ease of distinguishing between different functions, and should not constitute any limitation on this application. This application does not exclude a possibility that another name is used in the 5G network and another future network. For example, in a 6G network, some or all of the foregoing network elements may still use terms in 5G, or may use other names.

It should be further understood that names of interfaces between the foregoing network elements in FIG. 1 are merely examples, and the interfaces may have other names during specific implementation. This is not specifically limited in this application. In addition, names of messages (or signaling) transmitted between the foregoing network elements are merely examples, and do not constitute any limitation on functions of the messages.

The access network device may also be referred to as a radio access network (radio access network, RAN) device. The access network device is configured to provide a network access function for an authorized terminal device in a specific area, and can use transmission tunnels with different quality of service based on levels of terminal devices, service requirements, and the like. The access network device can manage a radio resource, provide an access service for the terminal device, and further complete forwarding of control information and user data between the terminal device and a core network. The access network device may also be understood as a base station (base station) in a conventional network.

For example, the access network device in embodiments of this application may be any communication device that has a wireless transceiver function and that is configured to communicate with the terminal device. The access network device includes but is not limited to an evolved NodeB (evolved NodeB, eNB), a next generation NodeB (next generation NodeB, gNB) in an NR system, a transmission reception point (transmission reception point, TRP), one antenna panel or a group of (including a plurality of antenna panels) antenna panels of a base station in the 5G network, a network node that forms a gNB or a TRP, such as a baseband unit (baseband unit, BBU) or a distributed unit (distributed unit, DU), or the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical (physical, PHY) layer protocol and a real-time service, and implements functions of a radio link control (radio link control, RLC) layer, a media access control (media access control, MAC) layer, and a PHY layer. The AAU implements some PHY layer processing functions, radio frequency processing, and a function related to an active antenna. Information at the RRC layer eventually becomes information at the PHY layer, or is converted from information at the PHY layer. Therefore, in this architecture, higher layer signaling such as RRC layer signaling may also be considered to be sent by the DU. It may be understood that the access network device may be a device including one or more of a CU, a DU, or an AAU. In addition, the CU may be classified as an access network device in an access network, or the CU may be classified as an access network device in a core network (core network, CN). This is not limited in this application.

It should be understood that in embodiments of this application, the UPF network element, the application server, the AMF network element, the SMF network element, the NEF network element, the EASDF network element, the NRF network element, the PCF network element, the UDM network element, and the AF network element all belong to core network devices. The core network device and the access network device may be referred to as network devices.

The terminal device may also be referred to as user equipment (user equipment), a terminal apparatus, an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, a user apparatus, or the like. The terminal device may be a device that provides voice/data connectivity for a user, for example, a handheld device or a vehicle-mounted device that has a wireless connection function. Currently, some examples of the terminal device may include a mobile phone (mobile phone), a tablet computer (pad), a computer (for example, a laptop computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, or a terminal device in a future evolved public land mobile network (public land mobile network, PLMN).

In addition, the terminal device may alternatively be a terminal device in an internet of things (internet of things, IoT) system. IoT is an important part in future development of information technologies. A main technical feature of the IoT is to connect things to a network by using a communication technology, to implement an intelligent network for human-machine interconnection and thing-thing interconnection. In an IoT technology, massive connections, deep coverage, and terminal device power saving can be implemented by using, for example, a narrowband (narrow band, NB) technology.

In addition, the terminal device may further include a smart printer, a train detector, and the like. Main functions include: collecting data, receiving control information and downlink data from the access network device, sending an electromagnetic wave, and transmitting uplink data to the access network device.

It should be understood that the terminal device may be any device that can access a network. The terminal device and the access network device 120 may communicate with each other by using a specific air interface technology.

Optionally, the terminal device may be configured to serve as an access network device. For example, the terminal device may serve as a scheduling entity that provides a sidelink signal between terminal devices in V2X, D2D, or the like. For example, a cellular phone and a car communicate with each other by using a sidelink signal. The cellular phone and a smart household device communicate with each other without using the access network device.

FIG. 2 is a diagram of a hardware architecture of a terminal device according to an embodiment of this application. For ease of description, FIG. 2 shows only main components of the terminal device. As shown in FIG. 2, the terminal device may include a processor 210, a memory 220, and a communication interface 230.

The processor 210 is mainly configured to: process a communication protocol and communication data, control the entire terminal device, execute a software program, and process data of the software program.

The processor 210 may include one or more processors. For example, the processor 210 may include an application processor (application processor, AP) 210A and a modem (modem) 210B. In addition, the processor 210 may further include a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like.

The application processor 210A may include an operating system and an application (application, APP) program running in the operating system. The operating system includes but is not limited to an Android (android) operating system, a Harmony operating system, or the like. The application program may be briefly referred to as an application. The application may be a native application (native application), such as settings, a home screen, and file management, or may be a third-party application, such as WeChat, a game, a taxi hailing application, and an XR application. Generally, the application processor 210A may support installation of applications with different functions, to meet different requirements of a user, applications such as drawing, presentation, word processing, a game, a phone, a video player, a music player, an email, instant message sending and receiving, photo management, a camera, a browser, a calendar, a clock, payment, an application market, a home screen, and health management.

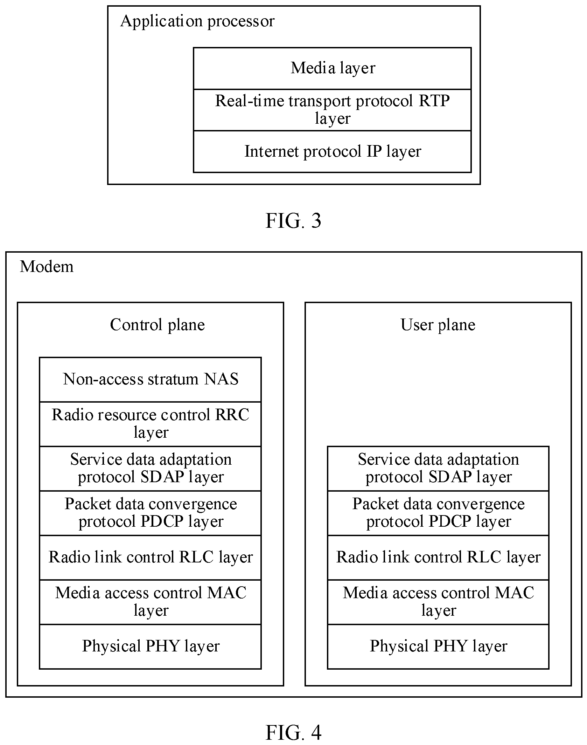

For example, an XR media service is used as an example. FIG. 3 is a diagram of layers on an AP side. Specifically, the AP side includes a media layer, a real-time transport protocol (real-time transport protocol, RTP) layer, and an IP layer.

The media layer is configured to process media data of the XR service, for example, encoding and decoding of video media data. For example, the media layer is configured to encode media data to obtain a protocol data unit set (protocol data unit set, PDU set). A PDU set may include a data frame, or may include other service data. This is not limited in embodiments of this application. It should be understood that, in embodiments of this application, the data frame may have another name, for example, a video frame. The data frame is used as an example for description in embodiments of this application, and should not be construed as a limitation on embodiments of this application.

The RTP layer is mainly configured to transmit an audio stream and/or a video stream.

The IP layer is mainly configured to perform process management, file network management, system security permission management, and communication foundation between a system and a hardware device.

In embodiments of this application, one PDU set may be split into at least one packet (packet). Specifically, one PDU set is split into at least one packet at the RTP layer, or one PDU set is split into at least one packet at the IP layer. This is not limited in embodiments of this application.

The modem 210B may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor 210A. The application processor 210A outputs a sound signal through an audio device (which is not limited to a speaker, a receiver, or the like), or displays an image or a video through a display. In some embodiments, the modem 210B may be an independent device. In some embodiments, the modem 210B may be independent of the processor, and is disposed in a same device as a radio frequency module or another functional module.

It should be noted that the modem 210B performs modulation and demodulation according to a protocol specified in a supported communication technology. The protocol specified in the communication technology in embodiments of this application may also be referred to as a communication protocol. A communication protocol stack is a sum of communication protocols at various layers. For example, with reference to FIG. 4, a communication protocol stack of the modem 210B may be classified into a control plane and a user plane that are vertically arranged. The control plane is used to transmit control signaling, and mainly includes a non-access stratum (non-access stratum, NAS), a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer. The user plane is used to transmit data information, and mainly includes an SDAP layer, a PDCP layer, an RLC layer, a MAC layer, and a PHY layer. It should be understood that, in different communication technologies, protocol layer classification manners of the control plane and the user plane may be different or may be the same. The RRC layer, the SDAP layer, the PDCP layer, the RLC layer, the MAC layer, and the PHY layer all belong to access strata (access stratum, AS).

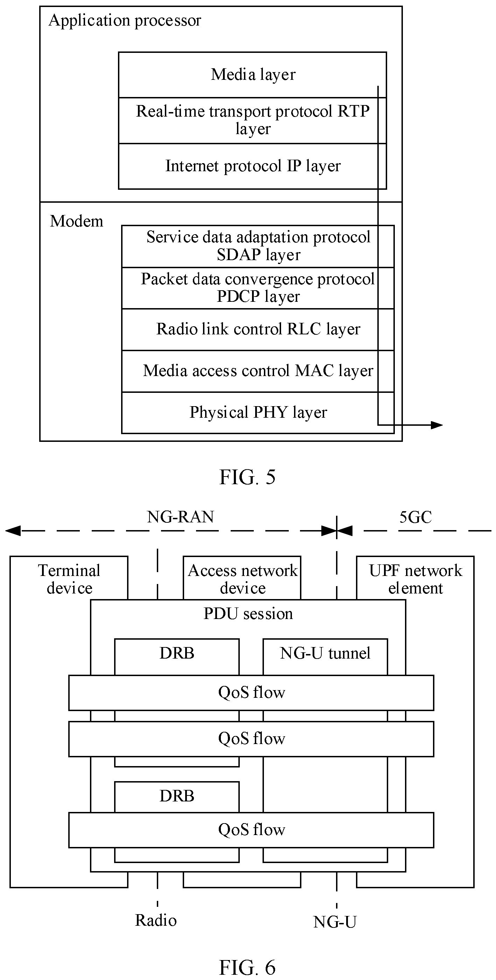

For example, with reference to FIG. 5, for the terminal device, in the AP of the terminal device, the media layer generates a PDU set, and provides the PDU set to a lower layer (for example, the RTP layer). At the RTP layer or the IP layer, the PDU set is split into at least one packet, and the at least one packet obtained through splitting is transmitted to the modem. In the modem of the terminal device, the at least one packet is sent to a network device after being processed by the SDAP layer, the PDCP layer, the RLC layer, the MAC layer, and the PHY layer, to implement uplink transmission, as shown by a broken line with an arrow in FIG. 5.

The memory 220 may be a read-only memory (read-only memory, ROM) or another type of static storage communication device capable of storing static information and instructions, a random access memory (random access memory, RAM) or another type of dynamic storage communication device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage communication device, or any other medium capable of carrying or storing expected program code in a form of instructions or data structures and capable of being accessed by a computer, but is not limited thereto. The memory 220 may exist independently, or may be integrated with the processor 210.

The memory 220 is configured to store a software program for executing the solutions of this application, and the processor 210 controls execution of the software program. For the specific implementation, refer to the following method embodiments. Details are not described herein.

The communication interface 230 is configured to communicate with another device or a communication network. For example, the communication interface 230 may include a module, a circuit, a transceiver, or any apparatus that can implement communication. Optionally, the communication interface 230 may alternatively be an input/output interface located in the processor 210, and is configured to implement signal input and signal output of the processor.

Optionally, the terminal device may further include a bus 240. The processor 210, the memory 220, and the communication interface 230 may be connected to each other through the bus 240. The bus 240 may be a peripheral component interconnect (peripheral component interconnect, PCI for short) bus, an extended industry standard architecture (extended industry standard architecture, EISA for short) bus, or the like. The bus 240 may be classified into an address bus, a data bus, a control bus, and the like. For ease of representation, only one thick line is used to represent the bus in FIG. 2, but this does not mean that there is only one bus or only one type of bus.

To facilitate understanding of embodiments of this application, the following briefly describes related technologies in this application.

1. PDU session

The PDU session is association between a terminal device and a data network, and is used to provide a PDU connection service.

2. QoS flow (flow) model

In a 5G network, to ensure end-to-end quality of service of a service, a QoS flow-based 5G QoS model is proposed, as shown in FIG. 6. A terminal device may establish one or more PDU sessions with the 5G network. One or more QoS flows may be established in each PDU session. Each QoS flow is identified by a QoS flow identifier (QoS flow identifier, QFI). A QFI uniquely identifies a QoS flow in a PDU session. In addition, each QoS flow corresponds to one data radio bearer (data radio bearer, DRB), and one DRB may correspond to one or more QoS flows.

3. Network slice

A concept of a network slice is introduced in a 5G communication system, and in a network slicing technology, one physical network can be divided into a plurality of virtual networks. One virtual network is considered as one "network slice", and network slices are independent of each other. Different PDU sessions in one terminal device may require network slices corresponding to the PDU sessions to provide a service. For example, one terminal device includes three PDU sessions, and each PDU session may correspond to one network slice. Different PDU sessions may correspond to a same network slice. In other words, the network slice may provide a network resource for at least one PDU session of the terminal device.

For one PDU session, a network slice provides a service for the PDU session. Correspondingly, a QoS flow in the PDU session is also mapped to the network slice.

4. Jitter and jitter duration

The jitter means a short-term and non-accumulative deviation of an effective moment of a digital signal from an ideal location of the digital signal in terms of time.

For example, a digital signal has an expected arrival moment, and the jitter duration is a deviation between an actual arrival moment of the digital signal and the expected arrival moment.

Alternatively, the jitter duration is a deviation between an actual arrival moment of the digital signal and an average arrival moment. The average arrival moment is a moment determined based on a plurality of digital signals.

Alternatively, a packet is used as an example. Jitter duration of the packet may be understood as a time interval between an earliest moment and a latest moment at which the packet may arrive.

5. XR

XR means a combination of real and virtual and human-machine interactive environment generated by using a computer technology and a wearable device. XR is proposed based on augmented reality (augmented reality, AR), virtual reality (virtual reality, VR), and mixed reality (mixed reality, MR). In other words, to avoid concept confusion, XR is actually a general term, including AR, VR, and MR. An XR service aims to use a high-speed network and a technology, for example, 360-degree imaging, to achieve an interactive immersive experience effect.

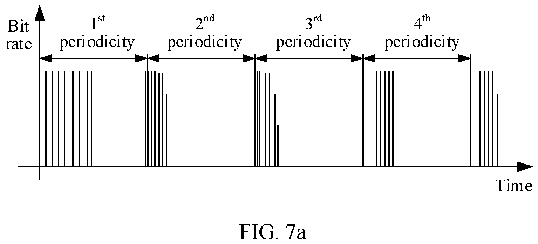

For example, a PDU set includes service data in a video frame (frame) of an XR service. An amount of data of the PDU set is large, and the PDU set is usually split into dozens of to hundreds of packets for transmission. As shown in FIG. 7a, each small vertical line represents a packet, and a packet in a PDU set is generated in a burst (burst) form, that is, there is no packet in a time period. Once there is a packet, a large quantity of packets centrally appear in a very short time period. In addition, the video frame is also periodic. For example, for a 60 fps XR video stream, a PDU set appears at an interval of 16.6666... ms (which is approximately equal to 16.67 ms).

Generally, there is an association relationship between different packets in a same PDU set. For example, a receiver device can reassemble a video frame only after receiving at least 90% of packets in a same PDU set. Therefore, the different packets in the same PDU set should be scheduled centrally as much as possible. In this way, a transmitter device needs to identify the different packets belonging to the same PDU set.

6. Related technologies for identifying different packets in a same PDU set

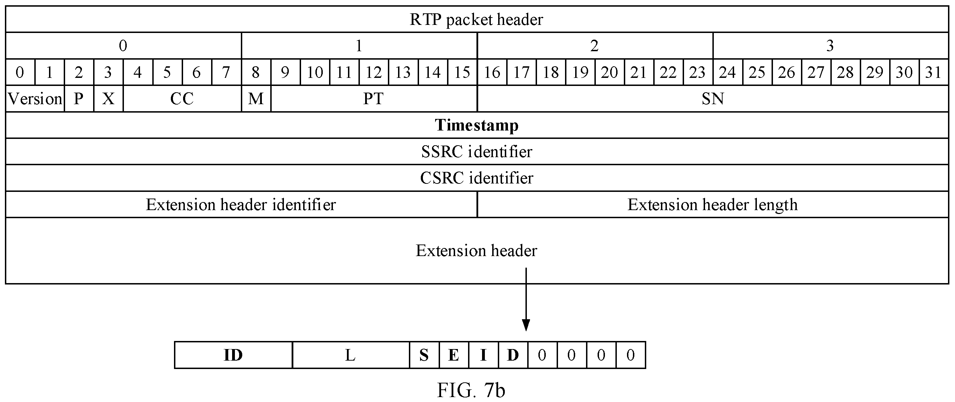

In a related technology 1, FIG. 7b is used as an example. FIG. 7b shows partial content of a packet header at an RTP layer. Information in a timestamp (timestamp) field in FIG. 7b indicates time at which a packet at the RTP layer is formed after a video frame is delivered from a media layer to the RTP layer. The information in the timestamp field may be understood as time at which service data corresponding to the video frame is encapsulated into the packet header at the RTP layer. Therefore, information in timestamp fields of different packets in a same PDU set is the same or similar.

Based on this, FIG. 5 is used as an example. For the modem of the terminal device, after receiving a packet from the application processor, the modem first determines a packet header at the IP layer, then continues to determine a packet header at the RTP layer, and reads information in a timestamp field from the packet header at the RTP layer, that is, the modem performs deep packet detection. The modem determines, based on the information in the timestamp field, specific packets belonging to the same PDU set.

A problem existing in the related technology 1 is that the modem performs deep parsing on the packet, that is, performs deep packet detection, which consumes processing resources of the modem. In addition, the modem does not need to sense deep information of the packet. However, because the modem performs deep packet detection, the modem may obtain related information of more user applications in a process of performing deep packet detection, and information leakage exists.

In a related technology 2, FIG. 7b is used as an example. FIG. 7b shows the partial content of the packet header at the RTP layer. An identifier (identifier, ID) field of an extension header (extension header) in FIG. 7b carries identification information. Information in ID fields of different packets in a same PDU set is the same.

Based on this, FIG. 5 is used as an example. For the modem of the terminal device, after receiving a packet from the application processor, the modem reads information in an ID field from a packet header at the RTP layer. The modem determines, based on the information in the ID field, specific packets belonging to the same PDU set.

In a related technology 3, FIG. 7b is used as an example. FIG. 7b shows the partial content of the packet header at the RTP layer. A SEID field of the extension header in FIG. 7b indicates a sequence of a packet in which the SEID field is located in a PDU set. For example, S indicates a frame start (start), and a value of an S bit indicates whether the packet in which the SEID field is located is a 1st packet at the beginning of the PDU set. E indicates a frame end (end). A value of an E bit indicates whether the packet in which the SEID field is located is a last packet at the end of the PDU set. I indicates an independent (independent) frame. A value of an I bit indicates whether the packet in which the SEID field is located is a unique packet in the PDU set. D indicates a discardable (discardable) frame. A value of a D bit indicates whether the packet in which the SEID field is located can tolerate being discarded.

Based on this, FIG. 5 is used as an example. For the modem of the terminal device, after receiving a packet from the application processor, the modem reads information in a SEID field from a packet header at the RTP layer. The modem determines, based on the information in the SEID field, specific packets belonging to the same PDU set.

A problem existing in the related technology 2 and the related technology 3 is that the modem consumes more processing resources and may leak related information of a user application, and there is an information security problem. For details, refer to the analysis in the related technology 1. Details are not described herein again. In addition, in the related technology 2 and the related technology 3, a length of a contributing source identifiers (contributing source identifiers, CSRC) field before the extension header is not fixed, and the length of the CSRC field is indicated by a contributing source count (CSRC count, CC) field. In other words, a location of the extension header in the packet header at the RTP layer is not fixed. To be specific, the modem needs to first determine a value of the CC field, then determine the length of the CSRC field based on the value of the CC field, determine the location of the extension header based on the length of the CSRC field, and then read the information in the ID field of the extension header or the information in the SEID field of the extension header. In other words, the modem cannot read information at a fixed location.

In the related technology 1, the related technology 2, and the related technology 3, an RTP packet is used as an example for description. When the RTP packet is replaced with another packet, for example, a secure real-time transport protocol (secure real-time transport protocol, SRTP) packet, a transmission control protocol (transmission control protocol, TCP) packet, or a user datagram protocol (user datagram protocol, UDP) packet, the modem has different processing manners. In terms of the foregoing processing manner of the modem, there is a problem in identifying the packet in the same PDU set by the modem, for example, a problem such as occupying a large quantity of processing resources and information security leakage. Therefore, how to better identify different packets belonging to a same PDU set is an urgent technical problem to be resolved.

In view of this, embodiments of this application provide three communication methods (a first communication method, a second communication method, and a third communication method). The methods may be applied to the communication system shown in FIG. 1. In the following embodiments of this application, names of messages between network elements, names of parameters in messages, or the like are merely examples, and there may be other names during specific implementation. Unified descriptions are provided herein and details are not described below again.

**Embodiment 1**

Embodiment 1 mainly describes a first communication method. In the first communication method, a communication device determines at least one first packet in first duration. The at least one first packet belongs to a same PDU set. The first duration is determined based on a first interval. The first interval is a time interval at which the communication device obtains two adjacent PDU sets in time domain. Then, the communication device sends the at least one first packet. Different packets in a same PDU set appear in a burst form. Therefore, when the first duration is determined based on the first interval, the communication device uses the first packet in the first duration a packet in the same PDU set, and centrally sends packets in the same PDU set, so that a receiver device can receive as many packets as possible in the same PDU set, to reassemble a video frame and ensure effective transmission of service data.

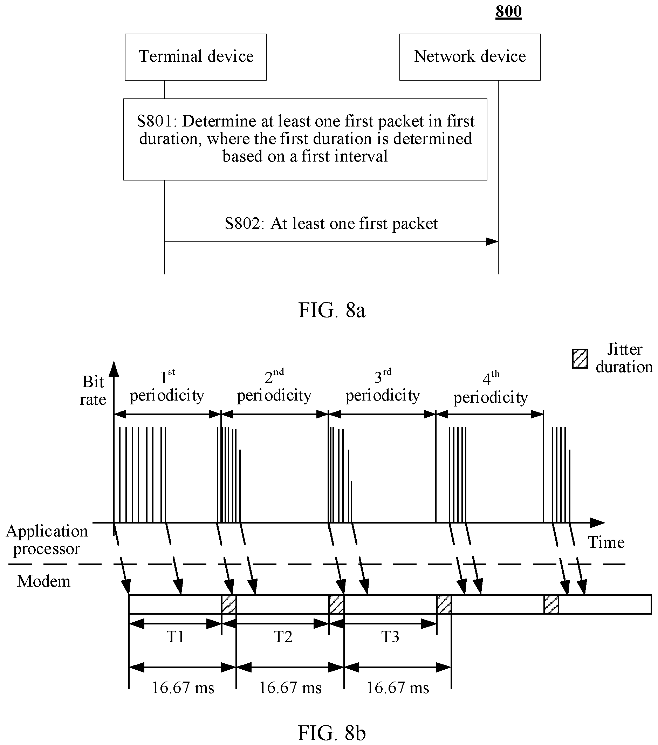

As shown in FIG. 8a, uplink transmission is used as an example. A communication method 800 provided in an embodiment of this application includes the following steps.

S801: A terminal device determines at least one first packet in first duration.

The at least one first packet belongs to a same PDU set. It should be understood that, in this embodiment of this application, a PDU set may include service data in a video frame, or may include other content. This is not limited in this embodiment of this application. For ease of description, in this embodiment of this application, the PDU set to which the at least one first packet belongs is denoted as a first PDU set.

The first duration is described as follows: The first duration is determined based on a first interval. The first interval is a time interval at which the terminal device obtains two adjacent PDU sets in time domain. The first interval may be understood as a time interval between a 1st packet in the former PDU set and a 1st packet in the latter PDU set in the two adjacent PDU sets in time domain that are obtained by the communication device; a time interval between a 2nd packet in the former PDU set and a 2nd packet in the latter PDU set in the two adjacent PDU sets in time domain that are obtained by the communication device; or a time interval between a last packet in the former PDU set and a last packet in the latter PDU set in the two adjacent PDU sets in time domain that are obtained by the communication device.

A 60 fps XR video stream is used as an example. The first interval is 16.6666... ms, which is approximately equal to 16.67 ms. It should be understood that in this embodiment of this application, the first interval may also have another name, for example, a frame interval or a PDU set interval. In this embodiment of this application, the first interval is used as an example for description.

It should be noted that, in this embodiment of this application, that a terminal device determines at least one first packet in first duration means that a modem of the terminal device receives the at least one first packet from an application processor, as shown in FIG. 5. For the modem of the terminal device, an SDAP layer in the modem receives the at least one first packet from an IP layer in the first duration.

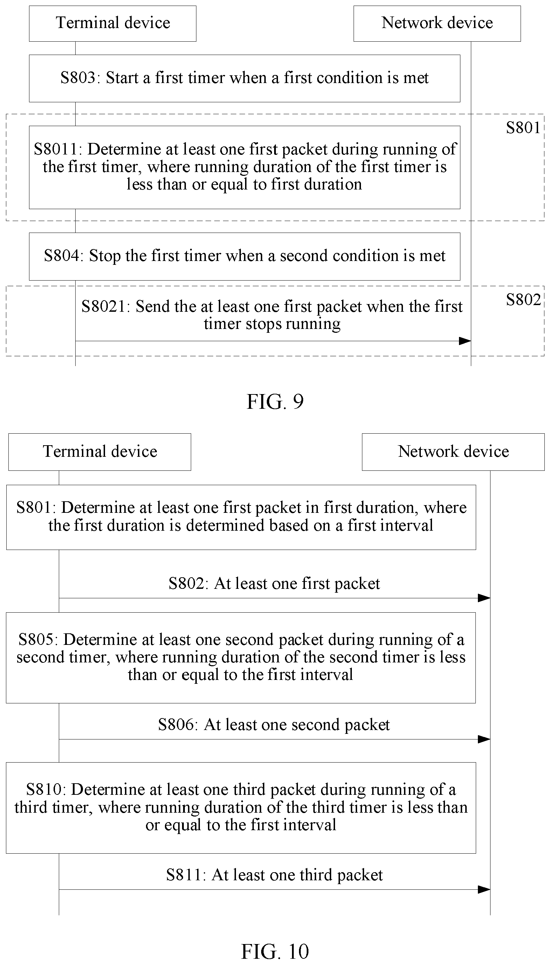

In some embodiments, as shown in FIG. 9, S801 includes S8011.

S8011: The terminal device determines the at least one first packet during running of a first timer.

Running duration of the first timer is less than or equal to the first duration. Timing duration of the first timer is equal to the first duration. The first duration is equal to a difference between the first interval and a first adjustment factor. Alternatively, the first duration is equal to a sum of the first interval and a first adjustment factor. It should be understood that a communication system in which the terminal device is located may pre-specify a relationship between the first duration, the first interval, and the first adjustment factor. For example, it is specified in a related protocol specification that the first duration is equal to the difference between the first interval and the first adjustment factor, or the first duration is equal to the sum of the first interval and the first adjustment factor.

For example, the first adjustment factor is described as follows: The first adjustment factor is determined based on jitter duration. In some embodiments, a jitter may be represented in a form of a positive number or a negative number, and the jitter duration may be represented in a form of a positive number. For example, when the jitter is represented as +4 ms, it means an advance of up to 4 ms. In this case, the jitter duration is 4 ms. When the jitter is expressed as -4 ms, it means a delay of up to 4 ms. In this case, the jitter duration is 4 ms. The first adjustment factor may be equal to the jitter duration. In some other embodiments, a jitter may be represented in a form of a positive number or a negative number, and the jitter duration may be represented in a form of a positive number. For example, when the jitter is represented as +/-4 ms, it means an advance of up to 4 ms or a delay of up to 4 ms. Correspondingly, the jitter duration is 8 ms. For another example, when the jitter is represented as +/-2 ms, it means an advance of up to 2 ms or a delay of up to 2 ms. Correspondingly, the jitter duration is 4 ms. The first adjustment factor may be equal to half of the jitter duration or one third of the jitter duration. This is not limited in this embodiment of this application. Certainly, the first adjustment factor may alternatively be determined based on another duration parameter. In this embodiment of this application, the jitter duration is used as an example to describe a process of determining the first adjustment factor, and should not be construed as a limitation on this embodiment of this application. A unit of the first adjustment factor may include ms, or may include another unit. This is not limited in this embodiment of this application.

It should be understood that, when the jitter is zero, a value of the first adjustment factor is also zero.

For example, the first timer is described as follows: The first timer may be a timer configured inside the terminal device, or may be a timer that is independent of the terminal device and that is set outside the terminal device. This is not limited in this embodiment of this application.

For example, as shown in FIG. 8b, the first timer may be a timer T1. For the modem of the terminal device, after receiving a 1st packet (a 1st packet in the at least one first packet), the modem starts the timer T1. During running of the timer T1, the modem receives the at least one first packet. Running duration of the timer T1 is shown in FIG. 8b.

In other words, the terminal device determines the first duration in a timing manner of the first timer, to learn of a specific time period in which the at least one first packet is determined.

It should be noted that, in this embodiment of this application, the first duration is determined by using the first timer as a timing manner. Certainly, the terminal device may alternatively determine the first duration in another timing manner. This is not limited in this embodiment of this application.

In some embodiments, as shown in FIG. 9, the communication method 800 in this embodiment of this application further includes S803.

S803: The terminal device starts the first timer when a first condition is met.

The first condition includes at least one of the following (at least one of the following is met, namely, the first condition is met):

Condition a1: The terminal device obtains a 1st packet in the first PDU set. The modem of the terminal device is used as an example. The modem receives the 1st packet in the first PDU set from the application processor. In this case, the terminal device starts the first timer. It should be understood that, in this embodiment of this application, that the terminal device obtains a 1st packet in the first PDU set may be understood as that in the terminal device, the modem receives a 1st bit of the 1st packet in the first PDU set from the application processor. For example, when the modem receives the 1st bit of the 1st packet in the first PDU set from the application processor, the terminal device starts the first timer.

Condition a2: The terminal device obtains a first start marker (start marker). The first start marker indicates the terminal device to start obtaining a packet in the first PDU set. The modem of the terminal device is used as an example. The modem receives the first start marker from the application processor. In this case, the terminal device starts the first timer.

It should be understood that a starting condition of the first timer is described in S803 by using an example in which the at least one first packet belongs to the first PDU set. A sequence number (sequence number, SN) of the first PDU set is a first value. An example in which the SN of the first PDU set is an SN of the PDU set at the SDAP layer is used for description. The first value may be a value configured during initialization of the SDAP layer in the modem of the terminal device. For example, the SDAP layer configures the first value to 0 during initialization. In other words, the SN of the first PDU set is equal to 0. For another example, the SDAP layer configures the first value to 1 during initialization. In other words, the SN of the first PDU set is equal to 1.

In other words, when determining that the first condition is met, the terminal device starts the first timer in time, to accurately obtain the at least one first packet.

In some embodiments, as shown in FIG. 9, the communication method 800 in this embodiment of this application further includes S804.

S804: The terminal device stops the first timer when a second condition is met.

The second condition includes at least one of the following (at least one of the following is met, namely, the second condition is met):

Condition b1: Running of the first timer expires. For example, the terminal device stops the first timer when the running duration of the first timer is equal to the first duration.

Condition b2: The terminal device obtains a first end marker (end marker). The first end marker indicates the terminal device to stop obtaining a packet in the first PDU set. The modem of the terminal device is used as an example. The modem receives the first end marker from the application processor. In this case, the terminal device stops the first timer.

In other words, when determining that the second condition is met, the terminal device stops the first timer in time, to accurately obtain the at least one first packet.

For the terminal device, the terminal device uses, as a packet in the same PDU set, the at least one first packet determined in the first duration, and then the terminal device performs S802.

S802: The terminal device sends the at least one first packet to a network device. Correspondingly, the network device receives the at least one first packet from the terminal device.

FIG. 5 is used as an example. For the modem of the terminal device, after determining the at least one first packet, the SDAP layer sends the at least one first packet to the network device after the at least one first packet is processed by a PDCP layer, an RLC layer, a MAC layer, and a PHY layer. Correspondingly, the network device receives the at least one first packet from the terminal device. The network device may be the UPF network element in FIG. 1.

In some embodiments, as shown in FIG. 9, S802 includes S8021.

S8021: The terminal device sends the at least one first packet to the network device when the first timer stops running. Correspondingly, the network device receives the at least one first packet from the terminal device.

For example, the timing duration of the first timer is equal to the first duration. Correspondingly, when the first timer stops running, it means that the modem of the terminal device has obtained the at least one first packet corresponding to the same PDU set (for example, a video frame), then centrally schedules the first packet corresponding to the same PDU set, and sends the first packet to the network device.

In some embodiments, the terminal device can further determine a packet corresponding to another PDU set. As shown in FIG. 10, the communication method 800 in this embodiment of this application further includes S805 and S806.

S805: The terminal device determines at least one second packet during running of a second timer.

Running duration of the second timer is less than or equal to the first interval. For the first interval, refer to the descriptions of S801. Details are not described herein again. It should be understood that the first timer and the second timer may be a same timer, or may be different timers. When the first timer and the second timer are a same timer, starting the second timer means restarting the first timer. When the first timer and the second timer are different timers, the second timer may be a timer configured inside the terminal device, or may be a timer that is independent of the terminal device and that is set outside the terminal device. This is not limited in this embodiment of this application.

The at least one second packet belongs to a second PDU set. The second PDU set and the first PDU set belong to different PDU sets in a same service. For example, the first PDU set is adjacent to the second PDU set in time domain. It may be understood as that the first PDU set is closely adjacent to the second PDU set in time domain. For the modem of the terminal device, after determining the at least one first packet in the first PDU set, the modem determines a next PDU set as the second PDU set.

For example, as shown in FIG. 8b, the second timer may be a timer T2, and after the timer T1 stops running, the timer T2 is started. The modem receives the at least one second packet during running of the timer T2. Running duration of the timer T2 is shown in FIG. 8b.

In other words, the terminal device performs timing by using the second timer, to determine duration corresponding to the first interval, and therefore determine the at least one second packet in the duration corresponding to the first interval.

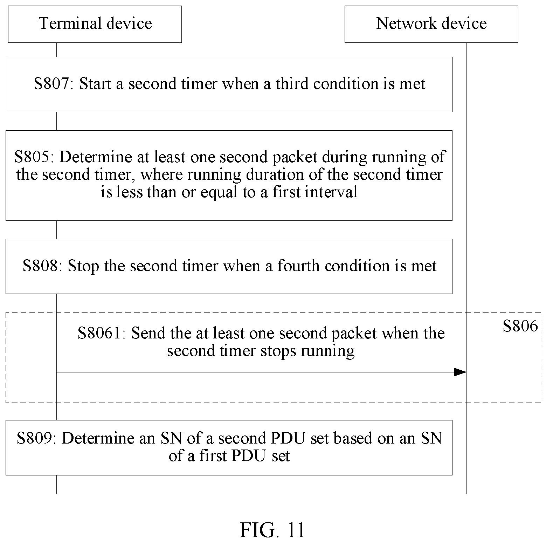

In some embodiments, as shown in FIG. 11, the communication method 800 in this embodiment of this application further includes S807.

S807: The terminal device starts the second timer when a third condition is met.

The third condition includes at least one of the following:

Condition c1: Running of the first timer expires. For example, when running of the first timer expires, the terminal device starts the second timer. Alternatively, when the first timer and the second timer are the same timer, it means that the terminal device restarts the first timer.

Condition c2: The terminal device obtains a second start marker. The second start marker indicates the terminal device to start obtaining a packet in the second PDU set. The modem of the terminal device is used as an example. The modem receives the second start marker from the application processor. In this case, the terminal device starts the second timer.

In other words, when determining that the third condition is met, the terminal device starts the second timer in time, to accurately obtain the at least one second packet.

In some embodiments, as shown in FIG. 11, the communication method 800 in this embodiment of this

22

application further includes S808.

S808: The terminal device stops the second timer when a fourth condition is met.

The fourth condition includes at least one of the following:

Condition d1: Running of the second timer expires. For example, when running of the second timer expires, the terminal device stops the second timer. Alternatively, when the first timer and the second timer are the same timer, it means that the terminal device stops the first timer.

Condition d2: The terminal device obtains a second end marker. The second end marker indicates the terminal device to stop obtaining a packet in the second PDU set. The modem of the terminal device is used as an example. The modem receives the second end marker from the application processor. In this case, the terminal device stops the second timer.

In other words, when determining that the fourth condition is met, the terminal device stops the second timer in time, to accurately obtain the at least one second packet.

For the terminal device, after determining the at least one second packet, the terminal device performs S806.

S806: The terminal device sends the at least one second packet to the network device. Correspondingly, the network device receives the at least one second packet from the terminal device.

For an implementation process of S806, refer to the descriptions of S802. Details are not described herein again.

In some embodiments, as shown in FIG. 11, S806 includes S8061.

S8061: The terminal device sends the at least one second packet to the network device when the second timer stops running. Correspondingly, the network device receives the at least one second packet from the terminal device.

For example, timing duration of the second timer is equal to the first interval. Therefore, when the second timer stops running, it means that the modem of the terminal device has obtained the at least one second packet corresponding to the same PDU set (for example, a video frame), centrally schedules different second packets belonging to the same PDU set, and sends the at least one second packet to the network device.

In some embodiments, as shown in FIG. 11, the communication method 800 in this embodiment of this application further includes S809.

S809: The terminal device determines an SN of the second PDU set based on the SN of the first PDU set.

For example, in time domain, if the second PDU set is after the first PDU set and is closely adjacent to the first PDU set, the SN of the second PDU set satisfies the following formula:

$$SN_2 = SN_1 + 1 \hspace{4cm} \text{Formula (1)}$$

$SN_2$ indicates the SN of the second PDU set at the SDAP layer, and $SN_1$ indicates the SN of the first PDU set at the SDAP layer.

It should be noted that the terminal device may first perform S807 and then perform S809, or may simultaneously perform S807 and S809. This is not limited in this embodiment of this application. Alternatively, when the terminal device performs S807, the terminal device may first perform S808 and then perform S809, or may first perform S809 and then perform S808, or may simultaneously perform S808 and S809. This is not limited in this embodiment of this application.

In some embodiments, the terminal device can further determine a packet corresponding to still another PDU set. As shown in FIG. 10, the communication method 800 in this embodiment of this application further includes S810 and S811.

S810: The terminal device determines at least one third packet during running of a third timer.

Running duration of the third timer is less than or equal to the first interval. For descriptions of the third timer, refer to the descriptions of the second timer. For descriptions of the first interval, refer to the descriptions of S801. Details are not described herein again.

The at least one third packet belongs to a third PDU set. The third PDU set, the second PDU set, and the first PDU set belong to a same service, and are PDU sets that are different from each other in the same service. For example, the second PDU set is adjacent to the third PDU set in time domain. It may be understood as that the second PDU set is closely adjacent to the third PDU set in time domain. For the modem of the terminal device, after determining the at least one second packet in the second PDU set, the modem determines a next PDU set as the third PDU set.

For example, as shown in FIG. 8b, the third timer may be a timer T3, and after the timer T2 stops running, the timer T3 is started. The modem receives the at least one third packet during running of the timer T3. Running duration of the timer T3 is shown in FIG. 8b.

In other words, the terminal device performs timing by using the third timer, to determine duration corresponding to the first interval, and therefore determine the at least one third packet in the duration corresponding to the first interval.

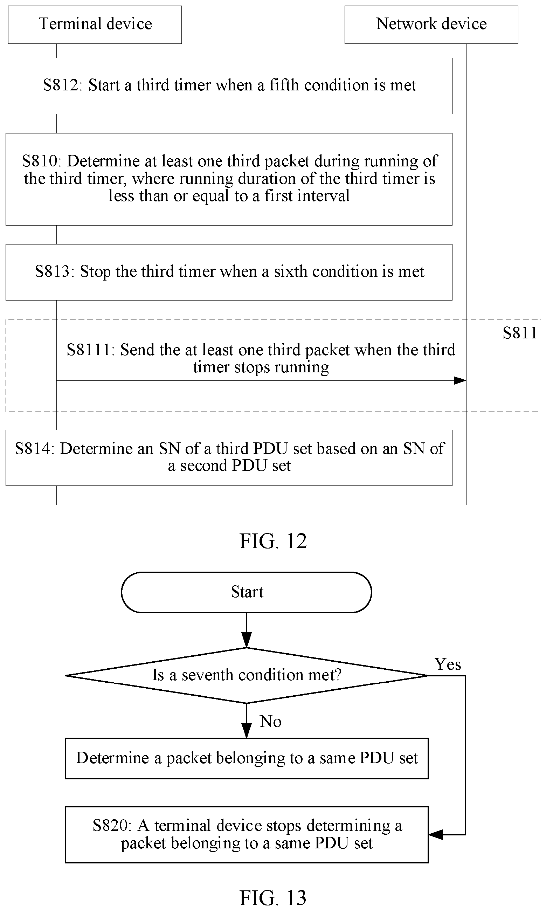

In some embodiments, as shown in FIG. 12, the communication method 800 in this embodiment of this application further includes S812.

S812: The terminal device starts the third timer when a fifth condition is met.

The fifth condition includes at least one of the following:

Condition e1: Running of the second timer expires. For example, when running of the second timer expires, the terminal device starts the third timer. Alternatively, when the second timer and the third timer are a same timer, it means that the terminal device restarts the second timer.

Condition e2: The terminal device obtains a third start marker. The third start marker indicates the terminal device to start obtaining a packet in the third PDU set. The modem of the terminal device is used as an example. The modem receives the third start marker from the application processor. In this case, the terminal device starts the third timer.

In other words, when determining that the fifth condition is met, the terminal device starts the third timer in time, to accurately obtain the at least one third packet.

In some embodiments, as shown in FIG. 12, the communication method 800 in this embodiment of this application further includes S813.

S813: The terminal device stops the third timer when a sixth condition is met.

The sixth condition includes at least one of the following:

Condition f1: Running of the third timer expires. For example, when running of the third timer expires, the terminal device stops the third timer. Alternatively, when the second timer and the third timer are a same timer, it means that the terminal device stops the second timer.

Condition f2: The terminal device obtains a third end marker. The third end marker indicates the terminal device to stop obtaining a packet in the third PDU set. The modem of the terminal device is used as an example. The modem receives the third end marker from the application processor. In this case, the terminal device stops the third timer.

In other words, when determining that the sixth condition is met, the terminal device stops the third timer in time, to accurately obtain the at least one third packet.

For the terminal device, after determining the at least one third packet, the terminal device performs S811.

S811: The terminal device sends the at least one third packet to the network device. Correspondingly, the network device receives the at least one third packet from the terminal device.

For an implementation process of S811, refer to the descriptions of S802. Details are not described herein again.

In some embodiments, as shown in FIG. 12, S811 includes S8111.

S8111: The terminal device sends the at least one third packet to the network device when the third timer stops running. Correspondingly, the network device receives the at least one third packet from the terminal device.

For example, timing duration of the third timer is equal to the first interval. Therefore, when the third timer stops running, it means that the modem of the terminal device has obtained the at least one third packet corresponding to the same PDU set (for example, a video frame), centrally schedules different third packets belonging to the same PDU set, and sends the at least one third packet to the network device.

In some embodiments, as shown in FIG. 12, the communication method 800 in this embodiment of this application further includes S814.

S814: The terminal device determines an SN of the third PDU set based on the SN of the second PDU set.

For example, in time domain, if the third PDU set is after the second PDU set and is closely adjacent to the second PDU set, the SN of the third PDU set satisfies the following formula:

$$SN_3 = SN_2 + 1 \qquad\qquad\qquad \text{Formula (2)}$$

$SN_3$ indicates the SN of the third PDU set at the SDAP layer, and $SN_2$ indicates the SN of the second PDU set at the SDAP layer.

It should be noted that the terminal device may first perform S812, and then perform S814, or may simultaneously perform S812 and S814. This is not limited in this embodiment of this application. Alternatively, when the terminal device performs S812, the terminal device may first perform S813 and then perform S814, or may first perform S814 and then perform S813, or may simultaneously perform S813 and S814. This is not limited in this embodiment of this application.

It should be understood that, in this embodiment of this application, an execution process of the terminal device is described by using the first PDU set, the second PDU set, and the third PDU set as an example. Certainly, if there are more PDU sets, the terminal device repeatedly performs the foregoing description process of the third timer, to schedule a packet in another PDU set. Details are not described herein again. As shown in FIG. 13, if there are more PDU sets, the terminal device repeatedly performs the foregoing description process of the third timer until the terminal device performs S820.

S820: When a seventh condition is met, the terminal device stops determining a packet belonging to a same PDU set.

The seventh condition includes at least one of the following (at least one of the following is met, namely, the seventh condition is met):

Condition g1: A service to which the at least one first packet belongs stops. Alternatively, a service to which the at least one first packet belongs terminates. Alternatively, a service to which the at least one first packet belongs is no longer transmitted. Alternatively, a service to which the at least one first packet belongs is no longer performed. Correspondingly, the terminal device does not need to send, to the network device, a packet of the service to which the at least one first packet belongs.

Condition g2: A PDU session is released. For example, a core network device (for example, an SMF network element) sends a PDU session release command to the terminal device. Correspondingly, the terminal device receives the PDU session release command from the core network device. The PDU session release command indicates a to-be-released PDU session. Correspondingly, the terminal device stops determining the packet belonging to the same PDU set.

Condition g3: A first QoS flow is released. For example, the core network device (for example, the SMF network element) sends a PDU session modification command to the terminal device. Correspondingly, the terminal device receives the PDU session modification command from the core network device. The PDU session modification command indicates a to-be-released QoS flow (or to-be-released QoS flows) in the PDU session. When the to-be-released QoS flow includes the first QoS flow, the terminal device stops determining the packet belonging to the same PDU set.

Condition g4: A DRB is released. For example, when the terminal device determines that a to-be-released DRB includes a DRB to which the first QoS flow is mapped, the terminal device stops determining the packet belonging to the same PDU set.

Condition g5: A network slice is not allowed to be used. For example, when the terminal device determines that the network slice not allowed to be used includes a network slice associated with the first QoS flow, the terminal device stops determining the packet belonging to the same PDU set.

Condition g6: A data network is not allowed to be used. For example, when the terminal device determines that the data network not allowed to be used includes a data network associated with the first QoS flow, the terminal device stops determining the packet belonging to the same PDU set.

The PDU session in the seventh condition is described as follows: The PDU session is used by the terminal device to send the at least one first packet. The QoS flow in the seventh condition is described as follows: The first QoS flow is a QoS flow in the PDU session, and the first QoS flow is used by the terminal device to send the at least one first packet. The DRB in the seventh condition is described as follows: The DRB is a radio bearer to which the first QoS flow is mapped. For a relationship between the PDU session, the QoS flow, and the DRB, refer to the descriptions of FIG. 6. Details are not described herein again. The network slice used for the first QoS flow includes the network slice in the condition g5.

In other words, when the seventh condition is met, the terminal device stops, in time, determining the packet belonging to the same PDU set, to save processing resources of the terminal device.

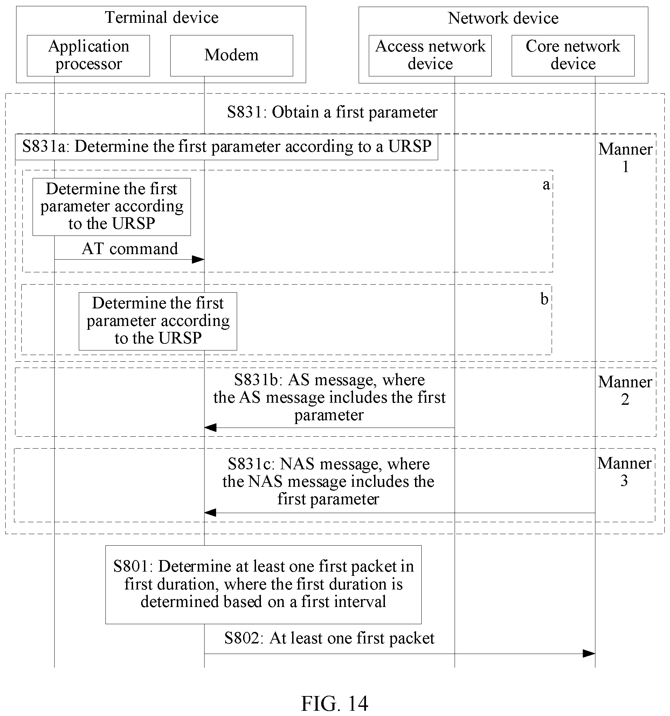

In some embodiments, as shown in FIG. 14, the communication method 800 in this embodiment of this application further includes S831.

S831: The terminal device obtains a first parameter.

The first parameter is described as follows:

Example 1: The first parameter indicates the first duration. For example, a value of the first parameter is equal to the first duration.

Example 2: The first parameter includes the first interval. For example, when the first parameter includes the first interval, the first duration is equal to the first interval. The terminal device may determine the timing duration of the second timer based on the first interval, to determine the at least one second packet in the duration corresponding to the first interval. Alternatively, the terminal device may determine the timing duration of the third timer based on the first interval, to determine the at least one third packet in the duration corresponding to the first interval.

Example 3: The first parameter includes the first interval and the first adjustment factor. For example, when the first parameter includes the first interval and the first adjustment factor, the first duration is equal to the sum of the first interval and the first adjustment factor, or the first duration is equal to the difference between the first interval and the first adjustment factor. The terminal device may determine the timing duration of the first timer based on the first duration, to determine the at least one first packet in the first duration.

S831 includes S831a, as shown in a dashed box in which "Manner 1" in FIG. 14 is located. Alternatively, S831 includes S831b, as shown in a dashed box in which "Manner 2" in FIG. 14 is located. Alternatively, S831 includes S831c, as shown in a dashed box in which "Manner 3" in FIG. 14 is located. S831a, S831b, and S831c are described as follows: S831a: The terminal device determines the first parameter according to a user equipment route selection policy (user equipment route selection policy, URSP).

The URSP is a policy preconfigured for the terminal device. For details, refer to a related technology. Details are not described herein.

For example, in a possible implementation, in the terminal device, the application processor determines the first parameter according to the URSP. The application processor sends an AT command (AT command) to the modem. Correspondingly, the modem receives the AT command from the application processor. The AT command includes the first parameter. For the modem, after the modem receives the AT command, the SDAP layer performs S801 based on the first parameter. For details, refer to the descriptions of S801. Details are not described herein again.

In another possible implementation, in the terminal device, the SDAP layer of the modem determines the first parameter according to the URSP, and then the SDAP layer performs S801 based on the first parameter. For details, refer to the descriptions of S801. Details are not described herein again.

In other words, the terminal device learns of the first duration according to the URSP policy of the terminal device.

It should be noted that, in S831a, a process of determining the first parameter is described by using the URSP as an example. This should not be construed as a limitation on this embodiment of this application. Certainly, the terminal device may alternatively determine the first parameter based on another parameter. For example, after determining the first parameter based on the another parameter, the application processor sends the AT command to the modem. The AT command includes the first parameter. In this way, the modem obtains the first parameter. For another example, the modem determines the first parameter based on another parameter. In this way, the modem may alternatively obtain the first parameter.

S831b: An access network device sends an AS message to the terminal device. Correspondingly, the terminal device receives the AS message from the access network device.

The AS message includes the first parameter. For example, the AS message includes at least one of the following: an RRC message, a PDCP control message (such as a PDCP control PDU), an RLC control message (such as an RLC control PDU), a media access control control element (media access control control element, MAC-CE), or downlink control information (downlink control information, DCI).

In other words, the access network device provides the first parameter for the terminal device, so that the terminal device accurately learns of the first duration.

S831c: The core network device sends a NAS message to the terminal device. Correspondingly, the terminal device receives the NAS message from the core network device.

The NAS message includes the first parameter. For example, the NAS message includes at least one of the following: a PDU session establishment message or a PDU session modification message.

The 5G network architecture shown in FIG. 1 is used as an example. The core network device includes an AMF network element, or the core network device includes the SMF network element. A 4G network architecture is used as an example. The core network device includes a mobility management entity (mobility management entity, MME).

In other words, the core network device provides the first parameter for the terminal device, so that the terminal device accurately learns of the first duration.

It should be noted that S831a, S831b, and S831c each provide an example of an implementation process of S831, and should not be construed as a limitation on this embodiment of this application. Certainly, the terminal device may alternatively obtain the first parameter in another manner. For example, the first parameter is preconfigured for the terminal device. The terminal device includes a universal integrated circuit card (universal integrated circuit card, UICC) and mobile equipment (mobile equipment, ME). The UICC is a hardware carrier of a universal subscriber identity module (universal subscriber identity module, USIM) application, and the UICC and the USIM application are provided by a UICC card supplier. Information stored in the USIM application is provided by an operator. The ME is hardware, for example, a mobile phone, of the terminal device. For the terminal device, the first parameter may be preconfigured in the ME, or may be preconfigured in the UICC. This is not limited in this embodiment of this application. For the modem of the terminal device, the modem reads the first parameter from a memory of the ME, or the modem reads the first parameter from the UICC.

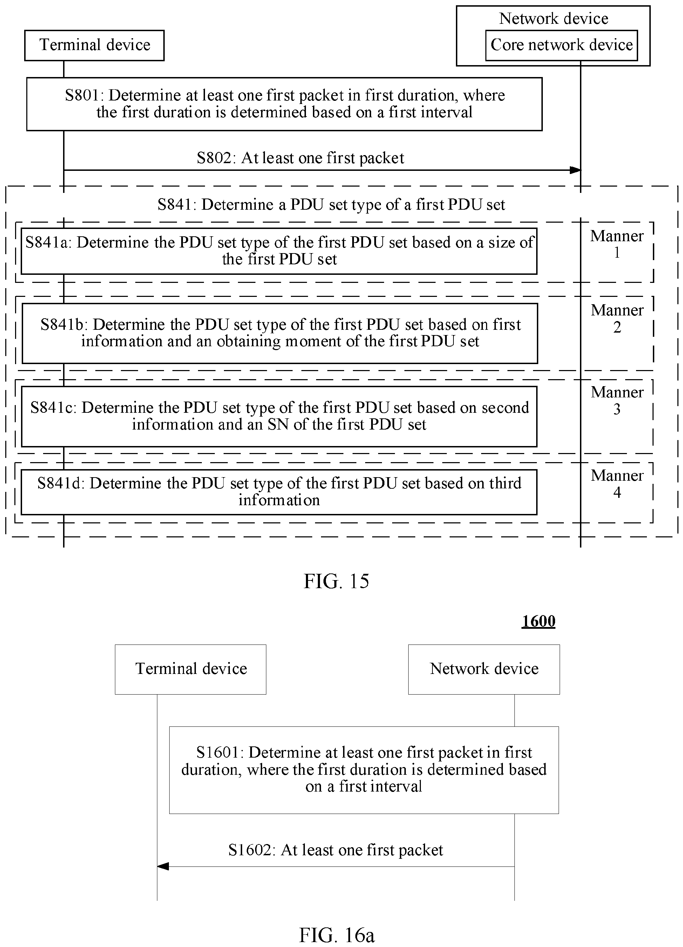

In some embodiments, as shown in FIG. 15, the communication method 800 in this embodiment of this application further includes S841.

S841: The terminal device determines a PDU set type of the first PDU set.

The first PDU set includes the at least one first packet. For the at least one first packet, refer to the descriptions of S801. Details are not described herein again.

S841 includes S841a, as shown in a dashed box in which "Manner 1" in FIG. 15 is located. Alternatively, S841 includes S841b, as shown in a dashed box in which "Manner 2" in FIG. 15 is located. Alternatively, S841 includes S841c, as shown in a dashed box in which "Manner 3" in FIG. 15 is located. Alternatively, S841 includes S841d, as shown in a dashed box in which "Manner 4" in FIG. 15 is located. S841a, S841b, S841c, and S841d are described as follows:

S841a: The terminal device determines the PDU set type of the first PDU set based on a size of the first PDU set.

For example, the size of the first PDU set includes at least one of the following: a quantity of first packets in the first PDU set, a quantity of bytes in the first PDU set, or a total quantity of bits corresponding to the first PDU set. In addition, the size of the first PDU set may alternatively be described in another manner, for example, a measure of the first PDU set. In this embodiment of this application, the size of the first PDU set is used as an example for description, and should not be construed as a limitation on this embodiment of this application.

For example, the video frame is used as an example, and the PDU set type includes an I type and a P type. The I type indicates that the video frame corresponding to the PDU set is an I frame, and the P type indicates that the video frame corresponding to the PDU set is a P frame.

For example, the video frame is still used as an example. Generally, a size of an I-type PDU set is two to three times a size of a P-type PDU set. When the size of the first PDU set is greater than or equal to a threshold 1, the terminal device (for example, the SDAP layer of the modem) determines that the first PDU set is of the I type. When the size of the first PDU set is less than a threshold 1, the terminal device (for example, the SDAP layer of the modem) determines that the first PDU set is of the P type. The threshold 1 may be a preconfigured parameter.

S841b: The terminal device determines the PDU set type of the first PDU set based on first information and an obtaining moment of the first PDU set.

The first information indicates a correspondence between a PDU set type and time at which the terminal device obtains a PDU set. For example, in a possible implementation, the first information indicates a specific time point at which the transmitted PDU set is of the I type, and/or the first information indicates a specific time point at which the transmitted PDU set is of the P type. In another possible implementation, the first information indicates a specific time period in which the transmitted PDU set is of the I type, and/or the first information indicates a specific time period in which the transmitted PDU set is of the P type.

FIG. 5 is still used as an example. The modem of the terminal device receives the at least one first packet from the application processor, and the SDAP layer of the modem determines, based on a receiving moment of the first packet and the first information, the PDU set type of the first PDU set to which the first packet belongs.

S841c: The terminal device determines the PDU set type of the first PDU set based on second information and the SN of the first PDU set.

The second information indicates a correspondence between an SN of a PDU set and a PDU set type. For example, for K consecutive PDU sets in time domain, every (K-1) P-type PDU sets are consecutive in time domain, and one I-type PDU set is after every (K-1) consecutive P-type PDU sets. In other words, every K PDU sets have a same PDU set type distribution rule. $K \geq 2$, and K is a positive integer.

For example, if the SN of the first PDU set satisfies a formula (3), the terminal device determines that the first PDU set is of the P type:

$$SN_1 \bmod K \neq 0 \hspace{4cm} \text{Formula (3)}$$

$SN_1$ indicates the SN of the first PDU set at the SDAP layer, mod indicates a modulo operation, and K indicates a quantity of PDU sets that have a same PDU set type distribution rule.

If the SN of the first PDU set satisfies a formula (4), the terminal device determines that the first PDU set is of the I type:

$$SN_1 \bmod K = 0 \hspace{4cm} \text{Formula (4)}$$

$SN_1$ indicates the SN of the first PDU set at the SDAP layer, and K indicates a quantity of PDU sets that have a same PDU set type distribution rule.

S841d: The terminal device determines the PDU set type of the first PDU set based on third information.

The third information indicates the PDU set type of the first PDU set. For example, the third information indicates that the PDU set type of the first PDU set is the I type, or the third information indicates that the PDU set type of the first PDU set is the P type.

FIG. 5 is still used as an example. The modem of the terminal device receives the third information from the application processor, and the SDAP layer of the modem determines, based on the third information, the PDU set type of the first PDU set to which the first packet belongs.

It should be noted that S841a, S841b, S841c, and S841d each provide an example of an implementation process of S841, and should not be construed as a limitation on this embodiment of this application. Certainly, the terminal device may alternatively determine the set type of the first PDU set in another manner. This is not limited in this embodiment of this application.

The foregoing uses uplink transmission as an example to describe a processing process on a terminal device side.

The following uses downlink transmission as an example to describe a processing process on a network device side. It should be understood that, in a downlink transmission process, a 5G network architecture is used as an example. A network device includes a UPF network element, an application server is equivalent to an application processor of a terminal device, and the UPF network element is equivalent to a modem of the terminal device. Alternatively, a network device includes an access network device, an application server is equivalent to an application processor of a terminal device, and the access network device is equivalent to a modem of the terminal device.

As shown in FIG. 16a, a communication method 1600 provided in an embodiment of this application includes the following steps.

S1601: A network device determines at least one first packet in first duration.

The 5G network architecture shown in FIG. 1 is used as an example. The network device includes a UPF network element, or the network device includes an access network device.

For an implementation process of S1601, refer to the descriptions of S801. Details are not described herein again.

It should be noted that, in a downlink transmission process, the 5G network architecture is used as an example, and that a network device determines at least one first packet may be understood as that the UPF network element receives the at least one first packet from an application server. That the network device obtains a start marker may be understood as that the UPF network element receives the start marker from the application server. That the network device obtains an end marker may be understood as that the UPF network element receives the end marker from the application server.

In some embodiments, when the network device determines the first duration in a timing manner of a first timer, for a starting condition and a stopping condition of the first timer, refer to the descriptions of FIG. 9. Details are not described herein again.

For the network device, the network device uses, as a packet in a same PDU set, the at least one first packet determined in the first duration, and then the network device performs S1602.

S1602: The network device sends the at least one first packet to a terminal device. Correspondingly, the terminal device receives the at least one first packet from the network device.

In some embodiments, the network device can further determine a packet corresponding to another PDU set (for example, a second PDU set). For details, refer to the descriptions of S805 and S806. Details are not described herein again.

In some embodiments, the network device can further determine an SN of the second PDU set. For details, refer to the descriptions of S809. Details are not described herein again. If there are more PDU sets, the network device repeatedly performs the foregoing description process of a third timer until the network device determines that a seventh condition is met. For details, refer to the descriptions of S820. Details are not described herein again.

It should be noted that in the downlink transmission process, when the network device includes the access network device, the SN of the second PDU set determined by the access network device may be an SN of the PDU set at an SDAP layer, or may be an SN at another layer (for example, a PDCP layer, an RLC layer, or a PHY layer). This is not limited in this embodiment of this application.

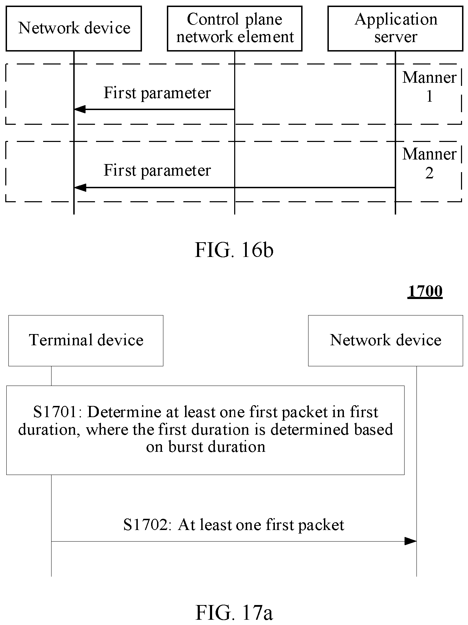

In some embodiments, the network device can further obtain a first parameter. With reference to FIG. 16b, the following provides descriptions in two manners (a manner 1 and a manner 2).

Manner 1: A control plane network element sends the first parameter to the network device. Correspondingly, the network device receives the first parameter from the control plane network element.

For the first parameter, refer to the descriptions of S831. Details are not described herein again.

The 5G network architecture shown in FIG. 1 is used as an example. The control plane network element includes an AMF network element, and the network device includes the access network device. In other words, the AMF network element sends the first parameter to the access network device. Correspondingly, the access network device receives the first parameter from the AMF network element.

The 5G network architecture shown in FIG. 1 is still used as an example. The control plane network element includes an SMF network element, and the network device includes the UPF network element. In other words, the SMF network element sends the first parameter to the UPF network element. Correspondingly, the UPF network element receives the first parameter from the SMF network element.

Manner 2: The application server sends the first parameter to the network device. Correspondingly, the network device receives the first parameter from the application server.

For the first parameter, refer to the descriptions of S831. Details are not described herein again.

The 5G network architecture shown in FIG. 1 is used as an example. The network device includes the access network device. In other words, the application server sends the first parameter to the access network device via the UPF network element. Correspondingly, the access network device receives the first parameter from the application server via the UPF network element. In this case, the UPF network element does not parse the first parameter.

The 5G network architecture shown in FIG. 1 is still used as an example. The network device includes the UPF network element. In other words, the application server sends the first parameter to the UPF network element. Correspondingly, the UPF network element receives the first parameter from the application server. In this case, the UPF network element parses the first parameter.

It should be noted that the manner 1 and the manner 2 each provide an example of an implementation process in which the network device obtains the first parameter, and should not be construed as a limitation on this embodiment of this application. Certainly, the network device may alternatively obtain the first parameter in another manner. For example, the first parameter is preconfigured for the network device, or the network device determines the first parameter based on configuration information. This is not limited in this embodiment of this application.

In some embodiments, the network device can further determine a PDU set type of a first PDU set. For details, refer to the descriptions of S841. Details are not described herein again.

## Embodiment 2

Embodiment 2 mainly describes a second communication method. In the second communication method, a communication device determines at least one first packet in first duration. The at least one first packet belongs to a same PDU set. The first duration is determined based on burst duration. The burst duration is duration of one PDU set. Then, the communication device sends the at least one first packet. Different packets in a same PDU set appear in a burst form. Therefore, when the first duration is determined based on the burst duration, the communication device determines the first packet in the first duration a packet in the same PDU set, and centrally sends the at least one first packet in the same PDU set, so that a receiver device can receive as many packets as possible in the same PDU set, to reassemble a video frame and ensure effective transmission of service data.

As shown in FIG. 17a, uplink transmission is used as an example. A communication method 1700 provided in an embodiment of this application includes the following steps.

S1701: A terminal device determines at least one first packet in first duration.

The at least one first packet belongs to a same PDU set. For the PDU set, refer to the descriptions of S801. Details are not described herein again.

The first duration is described as follows: The first duration is determined based on burst duration. The burst duration is duration of one PDU set. The burst duration may also be described as follows: The burst duration is a time interval between a $1^{st}$ packet and a last packet in a same PDU set that are obtained by the terminal device.

It should be understood that a start moment of the burst duration is a moment at which the terminal device obtains a $1^{st}$ bit of a $1^{st}$ packet in a PDU set. An end moment of the burst duration is a moment at which the terminal device obtains a last bit of a last packet in the same PDU set.

That the first duration is determined based on burst duration includes: The first duration is equal to a difference between the burst duration and a second adjustment factor. Alternatively, the first duration is equal to a sum of the burst duration and a second adjustment factor. For the second adjustment factor, refer to the descriptions of the first adjustment factor. Details are not described herein again. It should be understood that the first adjustment factor may be the same as or different from the second adjustment factor. This is not limited in this embodiment of this application.

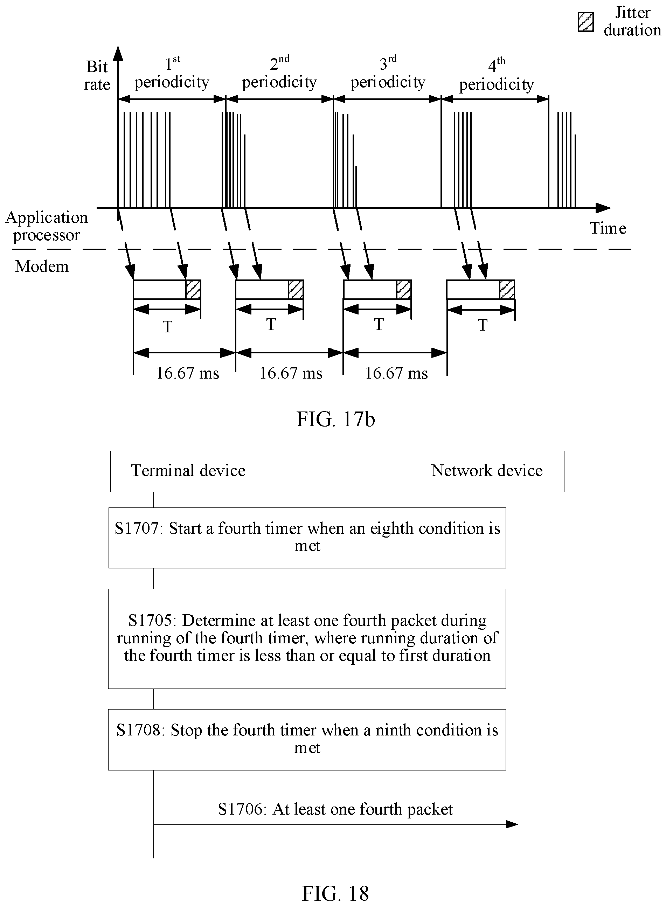

For example, as shown in FIG. 17b, a first timer may be a timer T. For a modem of the terminal device, after receiving a $1^{st}$ packet (for example, a $1^{st}$ bit of the $1^{st}$ packet in the at least one first packet), the modem starts the timer T. During running of the timer T, the modem receives the at least one first packet. Running duration of the timer T is shown in FIG. 17b.

In some embodiments, the terminal device determines the first duration in a timing manner of the first timer. For details, refer to the descriptions of S8011. For a starting condition and a stopping condition of the first timer, refer to the descriptions of FIG. 9. Details are not described herein again.

For the terminal device, the terminal device uses, as a packet in the same PDU set, the at least one first packet determined in the first duration, and then the terminal device performs S1702.

S1702: The terminal device sends the at least one first packet to a network device. Correspondingly, the network device receives the at least one first packet from the terminal device.

For an implementation process of S1702, refer to the descriptions of S802. Details are not described herein again.

In some embodiments, the terminal device can further determine a packet corresponding to another PDU set (for example, a fourth PDU set). As shown in FIG. 18, the communication method 1700 in this embodiment of this application further includes S1705 and S1706.

S1705: The terminal device determines at least one fourth packet during running of a fourth timer.

Running duration of the fourth timer is less than or equal to the first duration. For the first duration, refer to the descriptions of S1701. For the fourth timer, refer to the descriptions of S805. Details are not described herein again.

The at least one fourth packet belongs to the fourth PDU set. For the fourth PDU set, refer to the descriptions of the second PDU set in S805. Details are not described herein again.

Compared with S805, in S1705, timing duration of the fourth timer is different from timing duration of the second timer. For another processing process, refer to the descriptions of S805. Details are not described herein again.

In some embodiments, as shown in FIG. 18, the communication method 1700 in this embodiment of this application further includes S1707.

S1707: The terminal device starts the fourth timer when an eighth condition is met.

The eighth condition includes at least one of the following:

Condition h1: The terminal device obtains a 1st packet in the fourth PDU set. The modem of the terminal device is used as an example. The modem receives the 1st packet in the fourth PDU set from an application processor. In this case, the terminal device starts the fourth timer.

Condition h2: The fourth timer is started after the first timer, and an interval between a start moment of the fourth timer and a start moment of the first timer is the first interval. For the first interval, refer to the descriptions of FIG. 8a. Details are not described herein again.

Condition h3: The terminal device obtains a fourth start marker. The fourth start marker indicates the terminal device to start obtaining a packet in the fourth PDU set. The modem of the terminal device is used as an example. The modem receives the fourth start marker from the application processor. In this case, the terminal device starts the fourth timer.

In other words, when determining that the eighth condition is met, the terminal device starts the fourth timer in time, to accurately obtain the at least one fourth packet.

In some embodiments, as shown in FIG. 18, the communication method 1700 in this embodiment of this application further includes S1708.

S1708: The terminal device stops the fourth timer when a ninth condition is met.

The ninth condition includes at least one of the following:

Condition i1: Running of the fourth timer expires. For example, when running of the fourth timer expires, the terminal device stops the fourth timer. Alternatively, when the first timer and the fourth timer are a same timer, it means that the terminal device stops the first timer.

Condition i2: The terminal device obtains a fourth end marker. The fourth end marker indicates the terminal device to stop obtaining a packet in the fourth PDU set. The modem of the terminal device is used as an example. The modem receives the fourth end marker from the application processor. In this case, the terminal device stops the fourth timer.

In other words, when determining that the ninth condition is met, the terminal device stops the fourth timer in time, to accurately obtain the at least one fourth packet.

For the terminal device, after determining the at least one fourth packet, the terminal device performs S1706.

S1706: The terminal device sends the at least one fourth packet to the network device. Correspondingly, the network device receives the at least one fourth packet from the terminal device.

For an implementation process of S1706, refer to the descriptions of S1702. Details are not described herein again.

In some embodiments, S1706 includes: The terminal device sends the at least one fourth packet to the network device when the fourth timer stops running. Correspondingly, the network device receives the at least one fourth packet from the terminal device. For details, refer to the descriptions of S8061. Details are not described herein again.

In some embodiments, the terminal device can further determine an SN of the fourth PDU set. For details, refer to the descriptions of S809. Details are not described herein again.

If there are more PDU sets, the terminal device repeatedly performs the foregoing description process of the fourth timer until the terminal device performs S820.

In some embodiments, for a process in which the terminal device obtains the first duration, refer to S831. Details are not described herein again.

In some embodiments, the terminal device can further determine a PDU set type. For details, refer to S841. Details are not described herein again.

The foregoing uses uplink transmission as an example to describe a processing process on a terminal device side.

The following uses downlink transmission as an example to describe a processing process on a core network device side. It should be understood that, in a downlink transmission process, a 5G network architecture is used as an example. A network device includes a UPF network element, an application server is equivalent to an application processor of a terminal device, and the UPF network element is equivalent to a modem of the terminal device. Alternatively, a network device includes an access network device, an application server is equivalent to an application processor of a terminal device, and the access network device is equivalent to a modem of the terminal device.

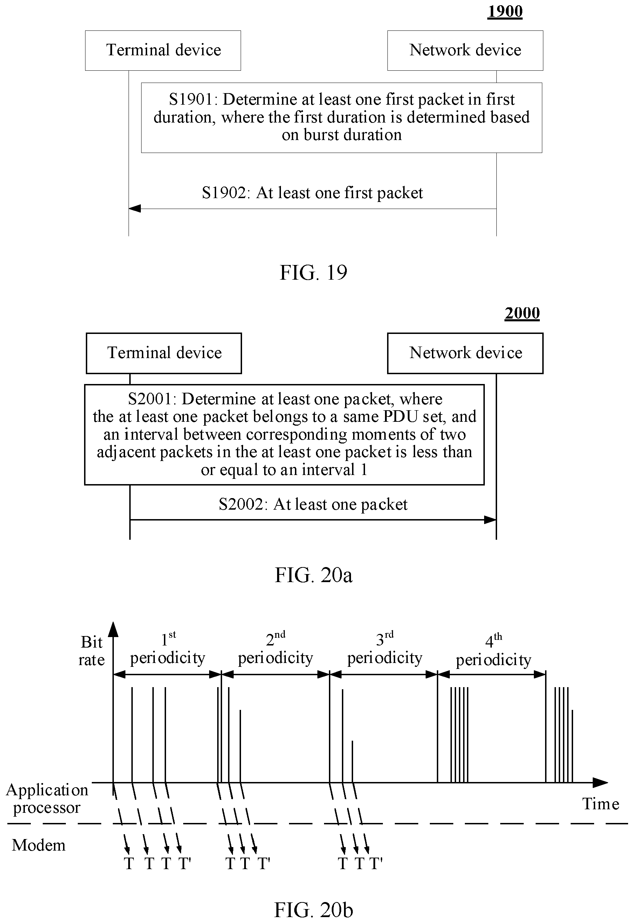

As shown in FIG. 19, a communication method 1900 provided in an embodiment of this application includes the following steps.

S1901: A network device determines at least one first packet in first duration.

The 5G network architecture shown in FIG. 1 is used as an example. The network device includes a UPF network element, or the network device includes an access network device.

For an implementation process of S1901, refer to the descriptions of S1701. Details are not described herein again.

It should be noted that in a downlink transmission process, for a case in which the network device obtains a packet, the network device obtains a start marker, and the network device obtains an end marker, refer to the descriptions of S1601. Details are not described herein again.

In some embodiments, when the network device determines the first duration in a timing manner of a first timer, for a starting condition and a stopping condition of the first timer, refer to the descriptions of FIG. 9. Details are not described herein again.

For the network device, the network device uses, as a packet in a same PDU set, the at least one first packet determined in the first duration, and then the network device performs S1902.

S1902: The network device sends the at least one first packet to a terminal device. Correspondingly, the terminal device receives the at least one first packet from the network device.

For an implementation process of S1902, refer to the descriptions of S802. Details are not described herein again.

In some embodiments, the network device can further determine a packet corresponding to another PDU set (for example, a fourth PDU set). For details, refer to the descriptions of S1705 and S1706. Details are not described herein again.

In some embodiments, the network device can further determine an SN of the fourth PDU set. For details, refer to the descriptions of S809. Details are not described herein again. If there are more PDU sets, the network device repeatedly performs the foregoing description process of a fourth timer until the network device determines that a seventh condition is met. For details, refer to the descriptions of S820. Details are not described herein again.

In some embodiments, the network device can further obtain a first parameter. For details, refer to the descriptions of FIG. 16b. Details are not described herein again.

In some embodiments, the network device can further determine a PDU set type of a first PDU set. For details, refer to the descriptions of S841. Details are not described herein again.

**Embodiment 3**

Embodiment 3 mainly describes a third communication method. In the third communication method, a communication device determines at least one packet. The at least one packet belongs to a same PDU set, and an interval between moments corresponding to two adjacent packets in the at least one packet is less than or equal to an interval 1. Then, the communication device sends the at least one packet. Because different packets in a same PDU set appear in a burst form, moments corresponding to adjacent packets in the same PDU set are less than or equal to the interval 1. If moments corresponding to adjacent packet are greater than the interval 1, it means that the two packets belong to different PDU sets. Therefore, if the interval between the moments corresponding to the two adjacent packets is less than or equal to the interval 1, the communication device considers the two adjacent packets a packet in the same PDU set, and then centrally sends the at least one packet in the same PDU set, so that a receiver device can receive as many packets as possible in the same PDU set, to reassemble a video frame and ensure effective transmission of service data.

As shown in FIG. 20a, uplink transmission is used as an example. A communication method 2000 provided in an embodiment of this application includes the following steps.

S2001: A terminal device determines at least one packet.

The at least one packet belongs to a same PDU set. For the PDU set, refer to the descriptions of S801. Details are not described herein again.

An interval between moments corresponding to two adjacent packets in the at least one packet is less than or equal to an interval 1. For example, the interval 1 is a time interval at which the terminal device obtains two adjacent packets in a same PDU set in time domain, for example, a maximum time interval between two adjacent packets.

It should be noted that, in this embodiment of this application, that a terminal device determines at least one packet means that a modem of the terminal device receives the at least one packet from an application processor, as shown in FIG. 5. For the modem of the terminal device, an SDAP layer of the modem receives the at least one packet from an IP layer.

For the terminal device, after the terminal device determines the at least one packet, the terminal device performs S2002.

S2002: The terminal device sends the at least one packet to a network device. Correspondingly, the network device receives the at least one packet from the terminal device.

For an implementation process of S2002, refer to the descriptions of S802. Details are not described herein again.

For example, as shown in FIG. 20b, a first timer may be a timer T. For the modem of the terminal device, after receiving one packet from the application processor, the modem starts the timer T.

In a first possible implementation, if the modem fails to receive a next packet from the application processor until running of the timer T expires, it means that the PDU set includes one packet (for example, the first packet in Example 1). When the timer T stops running, the terminal device sends the packet in the PDU set. For details, refer to the descriptions in Example 1.

Further, if running of the timer T expires, the terminal device further starts another timer T'. During running of the timer T', the modem may receive a next packet from the application processor. If the modem fails to receive the next packet from the application processor, it means that the PDU set includes one packet (that is, the first packet in Example 2). When the timer T stops running and the timer T' stops running, the terminal device sends the packet in the PDU set. For details, refer to the descriptions in Example 2. If the next packet is received from the application processor, it means that the PDU set includes at least two packets (that is, the first packet and the second packet in Example 2). When the timer T stops running and the timer T' stops running, the terminal device sends the packets in the PDU set. For details, refer to the descriptions in Example 3.

In a second possible implementation, if the modem receives a next packet from the application processor during running of the timer T, the timer T is restarted. If the modem fails to receive another packet from the application processor until running of the timer T expires, it means that the PDU set includes at least two packets (for example, the first packet and the third packet in Example 4). When the timer T stops running, the terminal device sends the packets in the PDU set. For details, refer to the descriptions in Example 4.

Further, if running of the timer T expires, the terminal device further starts another timer T'. During running of the timer T', the modem may receive a next packet from the application processor. If the modem fails to receive the next packet from the application processor, it means that the PDU set includes at least two packets (that is, the first packet and the third packet in Example 5). When the timer T stops running and the timer T' stops running, the terminal device sends the packets in the PDU set. For details, refer to the descriptions in Example 5. If the next packet is received from the application processor, it means that the PDU set includes at least three packets (that is, the first packet, the third packet, and the fourth packet in Example 6). When the timer T stops running and the timer T' stops running, the terminal device sends the packets in the PDU set. For details, refer to the descriptions in Example 6.

The following describes the communication method 2000 in this embodiment of this application by using six examples (Example 1 to Example 6).

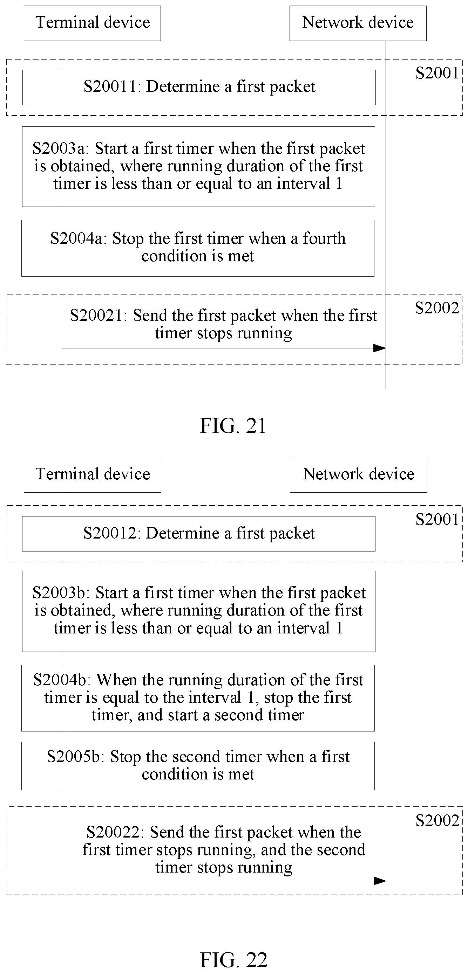

Example 1: As shown in FIG. 21, the first packet is used as an example for description with reference to a running status of the first timer.

In the communication method 2000 in this embodiment of this application, the terminal device further performs S2003a.

S2003a: The terminal device starts the first timer when the terminal device obtains the first packet.

The first packet is one of the at least one packet in S2001. For example, the first packet is a $1^{st}$ packet in S2001.

For the first timer, refer to the descriptions of S8011. Details are not described herein again. Running duration of the first timer is less than or equal to the interval 1. Timing duration of the first timer is equal to the interval 1. FIG. 20b is used as an example. The first timer may be the timer T.

For example, with reference to FIG. 5, for the modem of the terminal device, the modem receives the first packet from the application processor at a first moment. Correspondingly, the first timer is started at the first moment.

It should be noted that in S2003a, the first packet includes at least one of the following:

First item: a start marker (start marker). The start marker indicates the terminal device to start obtaining a packet in the PDU set to which the first packet belongs. For example, the first packet is a marker packet that carries the start marker. Correspondingly, after receiving the start marker packet from the application processor, the modem of the terminal device starts the first timer.

Second item: service data. The service data is data of a service to which the first packet belongs. For example, the first packet is a service packet that carries user plane data. Correspondingly, after receiving a $1^{st}$ service packet (that is, the first packet) from the application processor, the modem of the terminal device starts the first timer.

It should be understood that, in this embodiment of this application, that the terminal device obtains the first packet may be understood as that in the terminal device, the modem receives the first packet from the application processor.

In the communication method 2000 in this embodiment of this application, the terminal device further performs S2004a.

S2004a: The terminal device stops the first timer when a fourth condition is met.

The fourth condition includes at least one of the following:

Condition a1: The running duration of the first timer is equal to the interval 1. In other words, when the running duration of the first timer is equal to the timing duration, the terminal device stops the first timer.

Condition a2: The terminal device obtains an end marker. The end marker indicates the terminal device to stop obtaining a packet in the PDU set to which the first packet belongs. For example, in the terminal device, the application processor sends the end marker to the modem. Correspondingly, the modem receives the end marker from the application processor. Then, the terminal device stops the first timer.

In other words, when determining that the fourth condition is met, the terminal device stops the first timer in time.

In this case, for the terminal device, S2001 performed by the terminal device includes S20011.

S20011: The terminal device determines the first packet.

For example, in the terminal device, the application processor sends the first packet to the modem. Correspondingly, the modem receives the first packet from the application processor. The SDAP layer of the modem determines the first packet.

For the terminal device, when the terminal device performs S2003a, S2002 includes S20021.

S20021: The terminal device sends the first packet to the network device when the first timer stops running. Correspondingly, the network device receives the first packet from the terminal device.

For an implementation process of S20021, refer to the descriptions of S8021. Details are not described herein again.

In other words, when obtaining the first packet, the terminal device starts the first timer, and the terminal device fails to obtain another packet in the same PDU set until running of the first timer expires. In this case, the terminal device determines that the PDU set includes the first packet, and then sends the first packet to the network device.

Example 2: As shown in FIG. 22, the first packet is used as an example for description with reference to running statuses of the first timer and a second timer.

In the communication method 2000 in this embodiment of this application, the terminal device further performs S2003b.

S2003b: The terminal device starts the first timer when the terminal device obtains the first packet.

For an implementation process of S2003b, refer to the descriptions of S2003a. Details are not described herein again.

In the communication method 2000 in this embodiment of this application, the terminal device further performs S2004b.

S2004b: When the running duration of the first timer is equal to the interval 1, the terminal device stops the first timer, and starts the second timer.

For example, timing duration of the second timer is equal to the interval 1, and correspondingly, running duration of the second timer is less than or equal to the interval 1.

For another example, the timing duration of the second timer is equal to jitter duration, and correspondingly, the running duration of the second timer is less than or equal to the jitter duration.

For another example, the timing duration of the second timer is equal to preset duration, and correspondingly, the running duration of the second timer is less than or equal to the preset duration. The preset duration may be equal to half of the jitter duration or another duration parameter. This is not limited in this embodiment of this application.

It should be understood that the timing duration of the second timer may alternatively be equal to another parameter. This is not limited in this embodiment of this application.

FIG. 20b is used as an example. The first timer may be the timer T, and the second timer may be the timer T'.

In other words, when the first timer stops, the terminal device starts the second timer in time.

In the communication method 2000 in this embodiment of this application, the terminal device further performs S2005b.

S2005b: The terminal device stops the second timer when a first condition is met.

The first condition includes at least one of the following:

Condition b1: The running duration of the second timer is equal to the interval 1. In other words, when the running duration of the second timer is equal to the timing duration (where the timing duration is equal to the interval 1), the terminal device stops the second timer.

Condition b2: The running duration of the second timer is equal to the jitter duration. In other words, when the running duration of the second timer is equal to the timing duration (where the timing duration is equal to the jitter duration), the terminal device stops the second timer.

Condition b3: The running duration of the second timer is equal to the preset duration. The preset duration may be equal to half of the jitter duration or the another duration parameter. In other words, when the running duration of the second timer is equal to the preset duration, the terminal device stops the second timer.
Condition b4: The terminal device obtains an end marker. The end marker indicates the terminal device to stop obtaining a packet in the PDU set to which the first packet belongs.

In other words, when determining that the first condition is met, the terminal device stops the second timer in time, so that the terminal device can accurately determine different packets belonging to a same PDU set. During running of the second timer, the terminal device fails to obtain a new packet.

In this case, for the terminal device, S2001 performed by the terminal device includes S20012.

S20012: The terminal device determines the first packet.

For an implementation process of S20012, refer to the descriptions of S20011. Details are not described herein again.

For the terminal device, when the terminal device performs S2003b and S2004b, S2002 includes S20022.

S20022: The terminal device sends the first packet to the network device when the first timer stops running and the second timer stops running. Correspondingly, the network device receives the first packet from the terminal device.

For an implementation process of S20022, refer to the descriptions of S8021. Details are not described herein again.

In other words, when the first timer stops, the terminal device further starts the second timer, and the terminal device fails to obtain another packet in the same PDU set until running of the second timer expires. In this case, the terminal device determines that the PDU set includes the first packet, and then sends the first packet to the network device.

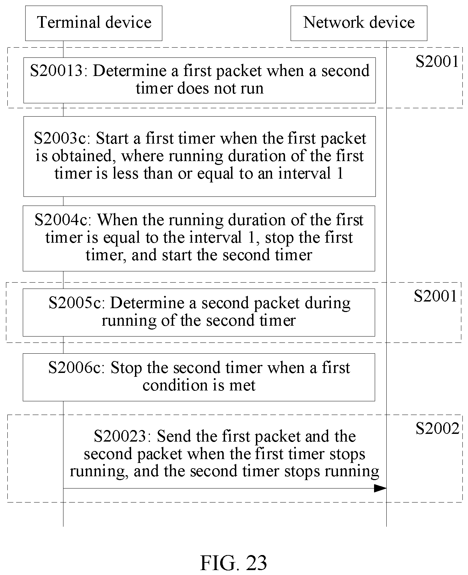

Example 3: As shown in FIG. 23, the first packet and the second packet are used as an example for description with reference to running statuses of the first timer and a second timer.

In the communication method 2000 in this embodiment of this application, the terminal device further performs S2003c.

S2003c: The terminal device starts the first timer when the terminal device obtains the first packet.

For an implementation process of S2003c, refer to the descriptions of S2003a. Details are not described herein again.

In the communication method 2000 in this embodiment of this application, the terminal device further performs S2004c.

S2004c: When the running duration of the first timer is equal to the interval 1, the terminal device stops the first timer, and starts the second timer.

For an implementation process of S2004c, refer to the descriptions of S2004b. Details are not described herein again.

In the communication method 2000 in this embodiment of this application, S2001 performed by the terminal device includes S20013 and S2005c.

S20013: The terminal device determines the first packet when the second timer does not run.

For an implementation process of S20013, refer to the descriptions of S20011. Details are not described herein again.

S2005c: The terminal device determines the second packet during running of the second timer.

The second packet and the first packet belong to the same PDU set.

For example, during running of the second timer, for the modem of the terminal device, the modem receives the second packet from the application processor.

In other words, when the first timer stops, the terminal device starts the second timer in time, and during running of the second timer, the terminal device obtains a missed packet, that is, the second packet.

In the communication method 2000 in this embodiment of this application, the terminal device further performs S2006c.

S2006c: The terminal device stops the second timer when a first condition is met.

For an implementation process of S2006c, refer to the descriptions of S2005b. Details are not described herein again.

For the terminal device, when the terminal device performs S2003c, S2004c, and S2005c, S2002 includes S20023.

S20023: The terminal device sends the first packet and the second packet to the network device when the first timer stops running and the second timer stops running. Correspondingly, the network device receives the first packet and the second packet from the terminal device.

For an implementation process of S20023, refer to the descriptions of S8021. Details are not described herein again.

In other words, when the first timer stops, the terminal device further starts the second timer in time, and during running of the second timer, the terminal device obtains the missed second packet. In this case, the terminal device determines that the PDU set includes the first packet and the second packet, and then sends the first packet and the second packet to the network device.

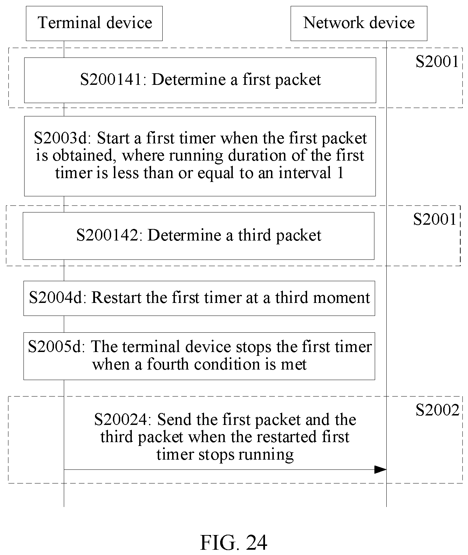

Example 4: As shown in FIG. 24, the first packet and the third packet are used as an example for description with reference to a running status of the first timer.

In the communication method 2000 in this embodiment of this application, the terminal device further performs S2003d.

S2003d: The terminal device starts the first timer when the terminal device obtains the first packet.

For an implementation process of S2003d, refer to the descriptions of S2003a. Details are not described herein again.

In the communication method 2000 in this embodiment of this application, the terminal device further performs S2004d.

S2004d: The terminal device restarts the first timer at a third moment.

The third moment is a moment at which the terminal device determines the third packet, and the third packet and the first packet belong to the same PDU set.

For example, with reference to FIG. 5, for the modem of the terminal device, the modem receives the third packet from the application processor at the third moment. Correspondingly, the first timer is restarted at the third moment.

In the communication method 2000 in this embodiment of this application, the terminal device further performs S2005d.

S2005d: The terminal device stops the first timer when a fourth condition is met.

For an implementation process of S2005d, refer to the descriptions of S2004a. Details are not described herein again.

In this case, for the terminal device, S2001 performed by the terminal device includes S200141 and S200142.

S200141: The terminal device determines the first packet.

For example, in the terminal device, the application processor sends the first packet to the modem at a first moment. Correspondingly, the modem receives the first packet from the application processor at the first moment. The SDAP layer of the modem determines the first packet at the first moment.

S200142: The terminal device determines the third packet.

For example, in the terminal device, the application processor sends the third packet to the modem at the third moment. Correspondingly, the modem receives the third packet from the application processor at the third moment. The SDAP layer of the modem determines the third packet at the third moment.

It should be understood that the first timer is started at the first moment. For details, refer to the descriptions of S2003d. The first timer is restarted at the third moment. For details, refer to the descriptions of S2004d.

For the terminal device, when the terminal device performs S2003d and S2004d, S2002 includes S20024.

S20024: The terminal device sends the first packet and the third packet to the network device when the restarted first timer stops running. Correspondingly, the network device receives the first packet and the third packet from the terminal device.

For an implementation process of S20024, refer to the descriptions of S8021. Details are not described herein again.

In other words, when obtaining the first packet, the terminal device starts the first timer, and when obtaining the third packet, restarts the first timer, and the terminal device fails to obtain another packet in the same PDU set until running of the first timer expires. In this case, the terminal device determines that the PDU set includes at least the first packet and the third packet, and then sends the first packet and the third packet to the network device.

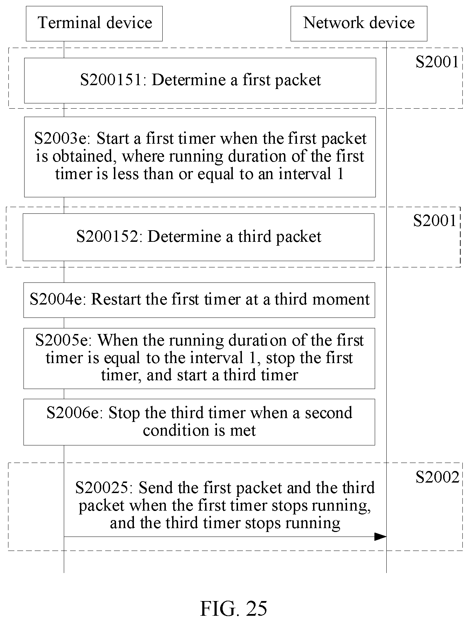

Example 5: As shown in FIG. 25, the first packet and the third packet are used as an example for description with reference to running statuses of the first timer and a third timer.

In the communication method 2000 in this embodiment of this application, the terminal device further performs S2003e.

S2003e: The terminal device starts the first timer when the terminal device obtains the first packet.

For an implementation process of S2003e, refer to the descriptions of S2003a. Details are not described herein again.

In the communication method 2000 in this embodiment of this application, the terminal device further performs S2004e.

S2004e: The terminal device restarts the first timer at a third moment.

For an implementation process of S2004e, refer to the descriptions of S2004d. Details are not described herein again.

In the communication method 2000 in this embodiment of this application, the terminal device further performs S2005e.

S2005e: When the running duration of the first timer is equal to the interval 1, the terminal device stops the first timer, and starts the third timer.

For an implementation process of S2005e, refer to the description of S2004b. Details are not described herein again.

S2006e: The terminal device stops the third timer when a second condition is met.

The second condition includes at least one of the following:

Condition c1: Running duration of the third timer is equal to the interval 1. In other words, when the running duration of the third timer is equal to timing duration (where the timing duration is equal to the interval 1), the terminal device stops the third timer.

Condition c2: Running duration of the third timer is equal to jitter duration. In other words, when the running duration of the third timer is equal to timing duration (where the timing duration is equal to the jitter duration), the terminal device stops the third timer.

Condition c3: Running duration of the third timer is equal to preset duration. The preset duration may be equal to half of the jitter duration or another duration parameter. In other words, when the running duration of the third timer is equal to the preset duration, the terminal device stops the third timer.

Condition c4: The terminal device obtains an end marker. The end marker indicates the terminal device to stop obtaining a packet in the PDU set to which the first packet belongs.

In other words, when determining that the second condition is met, the terminal device stops the third timer in time. During running of the third timer, the terminal device fails to obtain a new packet.

In this case, for the terminal device, S2001 performed by the terminal device includes S200151 and S200152.

S200151: The terminal device determines the first packet.

For an implementation process of S200151, refer to the descriptions of S200141. Details are not described herein again.

S200152: The terminal device determines the third packet.

For an implementation process of S200152, refer to the descriptions of S200142. Details are not described herein again.

It should be understood that the first timer is started at a first moment. For details, refer to the descriptions of S2003e. The first timer is restarted at the third moment. For details, refer to the descriptions of S2004e.

For the terminal device, when the terminal device performs S2003e and S2004e, S2002 includes S20025.

S20025: The terminal device sends the first packet and the third packet to the network device when the first timer stops running and the third timer stops running. Correspondingly, the network device receives the first packet and the third packet from the terminal device.

For an implementation process of S20025, refer to the descriptions of S8021. Details are not described herein again.

In other words, when obtaining the third packet, the terminal device restarts the first timer, and when the first timer stops, further starts the third timer, and the terminal device fails to obtain another packet in the same PDU set until running of the third timer expires. In this case, the terminal device determines that the PDU set includes the first packet and the third packet, and then sends the first packet and the third packet to the network device.

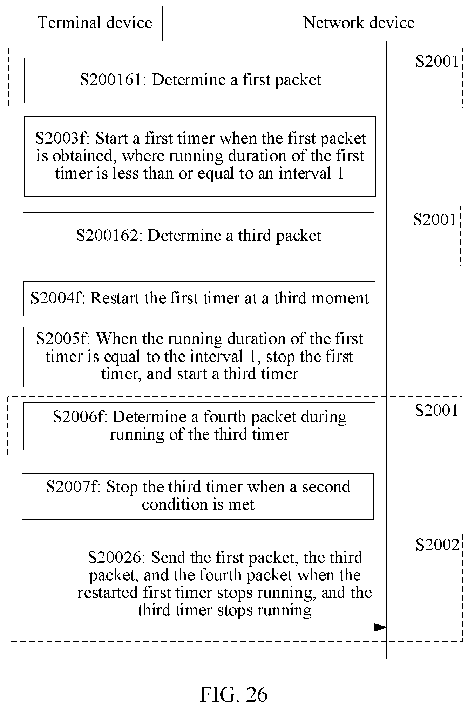

Example 6: As shown in FIG. 26, the first packet, the third packet, and the fourth packet are used as an example for description with reference to running statuses of the first timer and a third timer.

In the communication method 2000 in this embodiment of this application, the terminal device further performs S2003f.

S2003f: The terminal device starts the first timer when the terminal device obtains the first packet.

For an implementation process of S2003f, refer to the descriptions of S2003a. Details are not described herein again.

In the communication method 2000 in this embodiment of this application, the terminal device further performs S2004f.

S2004f: The terminal device restarts the first timer at a third moment.

For an implementation process of S2004f, refer to the descriptions of S2004d. Details are not described herein again.

In the communication method 2000 in this embodiment of this application, the terminal device further performs S2005f.

S2005f: When the running duration of the first timer is equal to the interval 1, the terminal device stops the first timer, and starts the third timer.

For an implementation process of S2005f, refer to the descriptions of S2004d. Details are not described herein again.

In this case, for the terminal device, S2001 performed by the terminal device includes S200161, S200162, and S2006f.

S200161: The terminal device determines the first packet.

For an implementation process of S200161, refer to the descriptions of S200141. Details are not described herein again.

S200162: The terminal device determines the third packet.

For an implementation process of S200162, refer to the descriptions of S200142. Details are not described herein again.

It should be understood that the first timer is started at a first moment. For details, refer to the descriptions of S2003f. The first timer is restarted at the third moment. For details, refer to the descriptions of S2004f.

S2006f: The terminal device determines the fourth packet during running of the third timer.

The fourth packet and the first packet belong to the same PDU set.

For an implementation process of S2006f, refer to the descriptions of S2005c. Details are not described herein again.

In the communication method 2000 in this embodiment of this application, the terminal device further performs S2007f.

S2007f: The terminal device stops the third timer when a second condition is met.

For an implementation process of S2007f, refer to the descriptions of S2006e. Details are not described herein again.

For the terminal device, when the terminal device performs S2003f, S2004f, S2005f, and S2006f, S2002 includes S20026.

S20026: The terminal device sends the first packet, the third packet, and the fourth packet to the network device when the restarted first timer stops running and the third timer stops running. Correspondingly, the network device receives the first packet, the third packet, and the fourth packet from the terminal device.

For an implementation process of S20026, refer to the descriptions of S8021. Details are not described herein again.

In other words, when the first timer stops, the terminal device further starts the third timer, and during running of the third timer, the terminal device obtains the missed fourth packet. In this case, the terminal device determines that the PDU set includes the first packet, the third packet, and the fourth packet, and then sends the first packet, the third packet, and the fourth packet to the network device.

In some embodiments, the terminal device can further determine a packet corresponding to another PDU set (for example, a second PDU set). In this case, the terminal device may repeatedly perform S2001 and S2002, to centrally schedule the packet corresponding to the another PDU set. If there are more PDU sets, the terminal device repeatedly performs the foregoing description process of S2001 and S2002 until the terminal device performs S820.

In some embodiments, the terminal device can further determine an SN of a PDU set. For details, refer to the descriptions of S809. Details are not described herein again.

In some embodiments, for a process in which the terminal device obtains the first duration, refer to S831. Details are not described herein again.

In some embodiments, the terminal device can further determine a PDU set type. For details, refer to S841. Details are not described herein again.

The foregoing uses uplink transmission as an example to describe a processing process on a terminal device side.

The following uses downlink transmission as an example to describe a processing process on a core network device side. It should be understood that, in a downlink transmission process, a 5G network architecture is used as an example. An application server is equivalent to an application processor of a terminal device, and a UPF network element is equivalent to a modem of the terminal device.

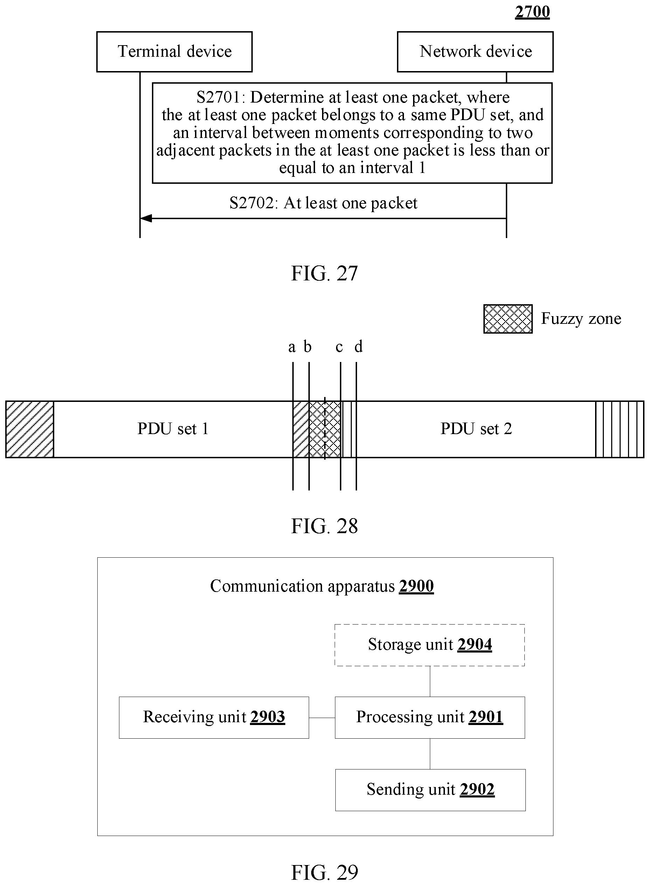

As shown in FIG. 27, a communication method 2700 provided in an embodiment of this application includes the following steps.

S2701: A core network device determines at least one packet.

For example, the 5G network architecture shown in FIG. 1 is used as an example, and the core network device includes a UPF network element.

For an implementation process of S2701, refer to the descriptions of S2001. Details are not described herein again.

It should be noted that, in a downlink transmission process, the 5G network architecture is used as an example, and that a core network device determines at least one packet may be understood as that the UPF network element receives the at least one packet from an application server. That the core network device obtains a start marker may be understood as that the UPF network element receives the start marker from the application server. That the core network device obtains an end marker may be understood as that the UPF network element receives the end marker from the application server.

For the core network device, after the core network device determines the at least one packet, the core network device performs S2702.

S2702: The core network device sends the at least one packet to a terminal device. Correspondingly, the terminal device receives the at least one packet from the core network device.

For an implementation process of S2702, refer to the descriptions of S2002. Details are not described herein again.

In some embodiments, the core network device can further determine a packet corresponding to another PDU set (for example, a second PDU set). In this case, the core network device may repeatedly perform S2701 and S2702, to centrally schedule the packet corresponding to the another PDU set. If there are more PDU sets, the core network device repeatedly performs the foregoing description process of S2701 and S2702 until the core network device performs S820.

In some embodiments, the core network device can further determine an SN of a PDU set. For details, refer to the descriptions of S809. Details are not described herein again.

In some embodiments, for a process in which the core network device obtains first duration, refer to S831. Details are not described herein again.

In some embodiments, the core network device can further determine a PDU set type. For details, refer to S841. Details are not described herein again.

It should be noted that in the three communication methods (the first communication method, the second communication method, or the third communication method described above) in embodiments of this application, in the uplink transmission process, an example in which the SN of the PDU set is the SN of the PDU set at the SDAP layer is used for description. Certainly, the SN of the PDU set may alternatively be replaced with an SN of the PDU set at another layer (for example, the PDCP layer, the RLC layer, or the PHY layer). This is not limited in embodiments of this application. In the downlink transmission process, when the network device includes the access network device, the SN of the PDU set determined by the access network device may be the SN of the PDU set at the SDAP layer, or may be an SN at another layer (for example, the PDCP layer, the RLC layer, or the PHY layer). This is not limited in embodiments of this application. When the network device includes the UPF network element, the SN of the PDU set determined by the UPF network element may be an SN of the PDU set at a layer of another communication protocol stack. This is not limited in embodiments of this application. For a PDU set, the same PDU set includes at least one packet, and different packets in the same PDU set correspond to a same SN. In embodiments of this application, adjacent means closely adjacent. For example, two packets that are adjacent in time domain are two packets that are closely adjacent in time domain. In embodiments of this application, that the communication device starts (or restarts) a timer when obtaining a $1^{st}$ packet in a PDU set may be understood as that the communication device starts (or restarts) a timer when obtaining a $1^{st}$ bit of the $1^{st}$ packet in the PDU set.

In the foregoing three communication methods (the first communication method, the second communication method, or the third communication method described above) in embodiments of this application, packets corresponding to two adjacent PDU sets in time domain are transmitted in different time periods. However, when an interval between the two adjacent PDU sets in time domain is short, and/or jitter duration is long, the following phenomenon may occur: Transmission time periods corresponding to the two adjacent PDU sets in time domain overlap, or may be described as a fuzzy zone.

FIG. 28 is used as an example. A PDU set 1 and a PDU set 2 are two adjacent PDU sets in time domain. When no jitter occurs, an end edge of the PDU set 1 is a location identified by a vertical line a. Due to the jitter, the end edge of the PDU set 1 changes to a location identified by a vertical line c. Similarly, when no jitter occurs, a start edge of the PDU set 2 is a location identified by a vertical line d. Due to the jitter, the start edge of the PDU set 2 changes to a location identified by a vertical line b. A fuzzy zone is denoted between the location identified by the vertical line b and the location identified by the vertical line c. Correspondingly, both a packet corresponding to the PDU set 1 and a packet corresponding to the PDU set 2 exist between the location identified by the vertical line b and the location identified by the vertical line c. In this case, how to identify different packets belonging to a same PDU set is an urgent technical problem to be resolved.

In view of this, an embodiment of this application provides a fourth communication method. The method may be applied to the communication system shown in FIG. 1. In the fourth communication method, in a possible implementation, a communication device determines, based on configuration information, a PDU set to which a packet in first duration belongs.

The first duration belongs to an overlapping part of two time periods. One of the two time periods is a time period for transmitting a packet corresponding to the former PDU set, and the other of the two time periods is a time period for transmitting a packet corresponding to the latter PDU set. FIG. 28 is used as an example. The first duration includes duration between the location identified by the vertical line b and the location identified by the vertical line c.

The configuration information includes one of the following:

First item: configuration information 1. The configuration information 1 indicates that the packet in the first duration belongs to a first PDU set. The first PDU set is the former PDU set in two adjacent PDU sets in time domain. FIG. 28 is used as an example. The configuration information 1 indicates that a packet in the fuzzy zone belongs to the PDU set 1.

Second item: configuration information 2. The configuration information 2 indicates that the packet in the first duration belongs to a second PDU set. The second PDU set is the latter PDU set in the two adjacent PDU sets in time domain. FIG. 28 is used as an example. The configuration information 2 indicates that a packet in the fuzzy zone belongs to the PDU set 2.

Third item: configuration information 3. The configuration information 3 indicates a segmentation moment in the first duration. The segmentation moment may be a moment at which the first duration is evenly segmented, and may also be referred to as a median line, for example, a location shown by a thick dashed line in FIG. 28. For example, a packet between the location identified by the vertical line b and the location identified by the thick dashed line belongs to the PDU set 1, and a packet between the location identified by the thick dashed line and the location identified by the vertical line c belongs to the PDU set 2. In this case, the communication device determines, based on the segmentation moment indicated by the configuration information 3 and a moment at which the communication device obtains each packet, a PDU set to which the packet belongs. It should be understood that the segmentation moment indicated by the configuration information 3 may be another segmentation point in the first duration, for example, a segmentation point for segmenting the first duration into M:N. M and N are positive numbers.

In an uplink transmission process, the communication device includes a terminal device. For example, a modem of the terminal device determines, based on the configuration information, the PDU set to which the packet in the first duration belongs. In a downlink transmission process, the communication device includes a UPF network element or an access network device. For example, the network device determines, based on the configuration information, the PDU set to which the packet in the first duration belongs.

For example, the configuration information may be information preconfigured for the communication device. When the communication device includes a terminal device, the configuration information may be information sent by the network device to the terminal device. This is not limited in this embodiment of this application.

In this way, the communication device may determine, based on the configuration information, the PDU set to which the packet in the fuzzy zone belongs. Then, the communication device can centrally send packets in a same PDU set, so that a receiver device can receive as many packets as possible in the same PDU set, to reassemble a video frame and ensure effective transmission of service data.

The foregoing mainly describes the solutions provided in embodiments of this application from the perspective of interaction between network elements. Correspondingly, embodiments of this application further provide a communication apparatus. The communication apparatus may be the network element in the foregoing method embodiments, or an apparatus including the foregoing network element, or a component that can be used in the network element. It may be understood that, to implement the foregoing functions, the communication apparatus includes a hardware structure and/or a software module for performing a corresponding function. A person skilled in the art should be easily aware that units, algorithms, and steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

For example, FIG. 29 is a diagram of a structure of a communication apparatus 2900. The communication apparatus 2900 includes a processing unit 2901, a sending unit 2902, and a receiving unit 2903.

In a possible example, the communication apparatus 2900 is the terminal device in FIG. 8a or FIG. 17a or the communication apparatus 2900 is the network device in FIG. 16a or FIG. 19.

The processing unit 2901 is configured to determine at least one first packet in first duration. The at least one first packet belongs to a same PDU set, and the first duration is determined based on a first interval or burst duration. The first interval is a time interval at which the communication apparatus 2900 obtains two adjacent PDU sets in time domain. The burst duration is duration of one PDU set. The sending unit 2902 is configured to send the at least one first packet.

In another possible example, the communication apparatus 2900 is the terminal device in FIG. 20a or the communication apparatus 2900 is the network device in FIG. 27.

The processing unit 2901 is configured to determine at least one packet. The at least one packet belongs to a same protocol data unit PDU set, and an interval between moments corresponding to two adjacent packets in the at least one packet is less than or equal to a first interval. The sending unit 2902 is configured to send the at least one packet.

Optionally, the communication apparatus 2900 may further include a storage unit 2904, configured to store program code and data of the communication apparatus, where the data may include but is not limited to original data, intermediate data, or the like.

The processing unit 2901 may be a processor or a controller, for example, may be a CPU, a general-purpose processor, an application specific integrated circuit (application specific integrated circuit, ASIC), a field programmable gate array (field programmable gate array, FPGA), or another programmable logic device, a transistor logic device, a hardware component, or any combination thereof. The processing unit may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The sending unit 2902 may be a communication interface, a transmitter, a sending circuit, or the like. The communication interface is a general term. During specific implementation, the communication interface may include a plurality of interfaces.

The receiving unit 2903 may be a communication interface, a receiver, a receiving circuit, or the like. The communication interface is a general term. During specific implementation, the communication interface may include a plurality of interfaces.

The sending unit 2902 and the receiving unit 2903 may be physically or logically implemented as a same unit.

The storage unit 2904 may be a memory.

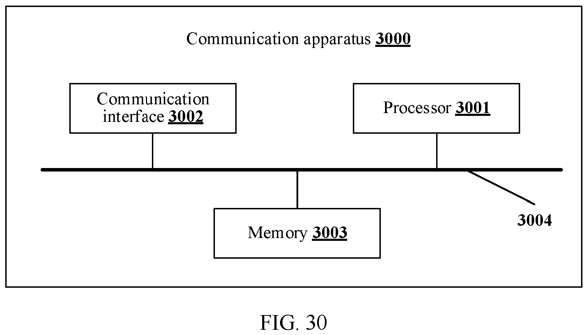

When the processing unit 2901 is a processor, the sending unit 2902 and the receiving unit 2903 are communication interfaces, and the storage unit 2904 is a memory, the communication apparatus in this embodiment of this application may be that shown in FIG. 30.

Refer to FIG. 30. The communication apparatus 3000 includes a processor 3001, a communication interface 3002, and a memory 3003. Optionally, the communication apparatus may further include a bus 3004. The communication interface 3002, the processor 3001, and the memory 3003 may be connected to each other by using the bus 3004. The bus 3004 may be a peripheral component interconnect (peripheral component interconnect, PCI) bus, an extended industry standard architecture (extended industry standard architecture, EISA) bus, or the like. The bus 3004 may be classified into an address bus, a data bus, a control bus, and the like. For ease of representation, only one thick line is used to represent the bus in FIG. 30, but this does not mean that there is only one bus or only one type of bus.

Optionally, an embodiment of this application further provides a computer program product including computer instructions. When the computer instructions are run on a computer, the computer is enabled to perform the methods in the foregoing embodiments.

Optionally, an embodiment of this application further provides a computer-readable storage medium. The computer-readable storage medium stores computer instructions. When the computer instructions are run on a computer, the computer is enabled to perform the methods in the foregoing embodiments.

Optionally, an embodiment of this application further provides a chip, including a processing circuit and a transceiver circuit. The processing circuit and the transceiver circuit are configured to implement the methods in the foregoing embodiments. The processing circuit is configured to perform a processing action in a corresponding method, and the transceiver circuit is configured to perform a receiving/sending action in the corresponding method.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state drive (solid state drive, SSD)), or the like.

In the several embodiments provided in this application, it should be understood that the disclosed system, apparatus, and method may be implemented in other manners. For example, the described apparatus embodiment is merely an example. For example, division into the modules is merely logical function division and may be other division in an actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical or other forms.

The units referred to as separate parts may or may not be physically separate, and parts displayed as units may or may not be physical units, may be located in one place, or may be distributed on a plurality of devices. Some or all of the units may be selected based on actual requirements to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions in this application essentially or the part contributing to the conventional technology may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A communication method, comprising:

    determining, by a communication device, at least one first packet in first duration, wherein the at least one first packet belongs to a same protocol data unit PDU set, the first duration is determined based on a first interval or burst duration, the first interval is a time interval at which the communication device obtains two adjacent PDU sets in time domain, and the burst duration is duration of one PDU set; and
    sending, by the communication device, the at least one first packet.

2. The method according to claim 1, wherein the determining, by a communication device, at least one first packet in first duration comprises:

    determining, by the communication device, the at least one first packet during running of a first timer, wherein running duration of the first timer is less than or equal to the first duration.

3. The method according to claim 2, wherein the at least one first packet belongs to a first PDU set, and a sequence number SN of the first PDU set is a first value; and
   the method further comprises:

    starting, by the communication device, the first timer when a first condition is met, wherein
    the first condition comprises at least one of the following:

        the communication device obtains a 1st packet in the first PDU set; or
        the communication device obtains a first start marker, wherein the first start marker indicates the communication device to start obtaining a packet in the first PDU set.

4. The method according to claim 3, wherein the method further comprises:

    stopping, by the communication device, the first timer when a second condition is met, wherein
    the second condition comprises at least one of the following:

        running of the first timer expires; or
        the communication device obtains a first end marker, wherein the first end marker indicates the communication device to stop obtaining a packet in the first PDU set.

5. The method according to claim 4, wherein
   the sending, by the communication device, the at least one first packet comprises:
   sending, by the communication device, the at least one first packet when the first timer stops running.

6. The method according to any one of claims 2 to 5, wherein that the first duration is determined based on a first interval comprises:

    the first duration is equal to a difference between the first interval and a first adjustment factor; or
    the first duration is equal to a sum of the first interval and a first adjustment factor.

7. The method according to claim 6, wherein the method further comprises:

determining, by the communication device, at least one second packet during running of a second timer, wherein running duration of the second timer is less than or equal to the first interval, and the at least one second packet belongs to a second PDU set; and

sending, by the communication device, the at least one second packet.

8. The method according to claim 7, wherein the method further comprises:

starting, by the communication device, the second timer when a third condition is met, wherein the third condition comprises at least one of the following:

running of the first timer expires; or
the communication device obtains a second start marker, wherein the second start marker indicates the communication device to start obtaining a packet in the second PDU set.

9. The method according to claim 8, wherein the method further comprises:

stopping, by the communication device, the second timer when a fourth condition is met, wherein the fourth condition comprises at least one of the following:

running of the second timer expires; or
the communication device obtains a second end marker, wherein the second end marker indicates the communication device to stop obtaining a packet in the second PDU set.

10. The method according to any one of claims 7 to 9, wherein the method further comprises:
determining, by the communication device, an SN of the second PDU set based on the SN of the first PDU set.

11. The method according to any one of claims 7 to 10, wherein
the sending, by the communication device, the at least one second packet comprises:
sending, by the communication device, the at least one second packet when the second timer stops running.

12. The method according to any one of claims 2 to 5, wherein that the first duration is determined based on burst duration comprises:

the first duration is equal to a sum of the burst duration and a second adjustment factor; or
the first duration is equal to a difference between the burst duration and a second adjustment factor.

13. The method according to claim 12, wherein the method further comprises:

determining, by the communication device, at least one third packet during running of a third timer, wherein running duration of the third timer is less than or equal to the first duration, and the at least one third packet belongs to a third PDU set; and
sending, by the communication device, the at least one third packet.

14. The method according to claim 13, wherein the method further comprises:

starting, by the communication device, the third timer when a fifth condition is met, wherein the fifth condition comprises at least one of the following:

the communication device obtains a $1^{st}$ packet in the third PDU set;
the third timer is started after the first timer, and an interval between a start moment of the third timer and a start moment of the first timer is the first interval; or
the communication device obtains a third start marker, wherein the third start marker indicates the communication device to start obtaining a packet in the third PDU set.

15. The method according to claim 14, wherein the method further comprises:

stopping, by the communication device, the third timer when a sixth condition is met, wherein the sixth condition comprises at least one of the following:

running of the third timer expires; or
the communication device obtains a third end marker, wherein the third end marker indicates the communication device to stop obtaining a packet in the third PDU set.

16. The method according to any one of claims 13 to 15, wherein the method further comprises:
determining, by the communication device, an SN of the third PDU set based on the SN of the first PDU set.

17. The method according to any one of claims 1 to 16, wherein the method further comprises:

when a seventh condition is met, stopping, by the communication device, determining a packet belonging to a same PDU set, wherein
the seventh condition comprises at least one of the following:

a service to which the at least one first packet belongs stops;
a PDU session is released;
a first quality of service QoS flow is released;
a data radio bearer DRB is released;
a network slice is not allowed to be used; or
a data network is not allowed to be used, wherein
the PDU session is used by the communication device to send the at least one first packet, the first QoS flow is a QoS flow in the PDU session, the first QoS flow is used by the communication device to send the at least one first packet, the DRB is a radio bearer to which the first QoS flow is mapped, the network slice is a network slice used for the first QoS flow, and the data network is a data network associated with the first QoS flow.

18. The method according to any one of claims 1 to 17, wherein the method further comprises:

obtaining, by the communication device, a first parameter, wherein
the first parameter indicates the first duration;
the first parameter comprises the first interval;
the first parameter comprises the first interval and the first adjustment factor;
the first parameter comprises the burst duration; or
the first parameter comprises the burst duration and the second adjustment factor.

19. The method according to claim 18, wherein the obtaining, by the communication device, a first parameter comprises:

determining, by the communication device, the first parameter according to a user equipment route selection policy URSP;
receiving, by the communication device, an access stratum AS message from an access network device, wherein the AS message comprises the first parameter; or
receiving, by the communication device, a non-access stratum NAS message from a core network device, wherein the NAS message comprises the first parameter.

20. The method according to any one of claims 1 to 19, wherein the method further comprises:
determining, by the communication device, a PDU set type of the first PDU set based on at least one of the following:

based on a size of the first PDU set;
based on first information and an obtaining moment of the first PDU set, wherein the first information indicates a correspondence between a PDU set type and time at which the communication device obtains a PDU set;
based on second information and the SN of the first PDU set, wherein the second information indicates a correspondence between an SN of a PDU set and a PDU set type; or
based on received third information, wherein the third information indicates the PDU set type of the first PDU set, wherein
the at least one first packet belongs to the first PDU set.

21. The method according to any one of claims 1 to 20, wherein

the communication device is a terminal device;
the communication device is an access network device; or

the communication device is a core network device.

22. A communication method, comprising:

determining, by a communication device, at least one packet, wherein the at least one packet belongs to a same protocol data unit PDU set, and an interval between moments corresponding to two adjacent packets in the at least one packet is less than or equal to a first interval; and
sending, by the communication device, the at least one packet.

23. The method according to claim 22, wherein the first interval is a time interval at which the communication device obtains two adjacent packets in a same PDU set in time domain.

24. The method according to claim 22 or 23, wherein the method further comprises:

starting, by the communication device, a first timer when the communication device obtains a first packet, wherein the at least one packet comprises at least the first packet; and
the sending, by the communication device, the at least one packet comprises:
sending, by the communication device, the first packet when the first timer stops running, wherein running duration of the first timer is less than or equal to the first interval.

25. The method according to claim 24, wherein the method further comprises:

stopping, by the communication device, the first timer when the communication device obtains an end marker, wherein
the end marker indicates the communication device to stop obtaining a packet in the PDU set to which the first packet belongs.

26. The method according to claim 24, wherein the method further comprises:

starting, by the communication device, a second timer when the first timer stops running; and
the sending, by the communication device, the first packet when the first timer stops running comprises:
sending, by the communication device, the first packet when the first timer stops running and the second timer stops running.

27. The method according to claim 26, wherein
the sending, by the communication device, the first packet when the first timer stops running and the second timer stops running comprises:

sending, by the communication device, the first packet and a second packet when the first timer stops running and the second timer stops running, wherein
the second packet is a packet determined by the communication device when the second timer runs, and the second packet and the first packet belong to the same PDU set.

28. The method according to claim 26 or 27, wherein the method further comprises:

stopping, by the communication device, the second timer when a first condition is met, wherein
the first condition comprises at least one of the following:

running duration of the second timer is equal to the first interval;
running duration of the second timer is equal to jitter duration;
running duration of the second timer is equal to preset duration; or
the communication device obtains an end marker, wherein the end marker indicates the communication device to stop obtaining a packet in the PDU set to which the first packet belongs.

29. The method according to claim 24, wherein the method further comprises:

restarting, by the communication device, the first timer at a third moment, wherein the third moment is a moment at which the communication device determines the third packet, and the third packet and the first packet belong to the same PDU set; and

the sending, by the communication device, the first packet when the first timer stops running comprises:

sending, by the communication device, the first packet and the third packet when the restarted first timer stops running.

30. The method according to claim 29, wherein the method further comprises:

starting, by the communication device, a third timer when the restarted first timer stops running; and
the sending, by the communication device, the first packet and the third packet when the restarted first timer stops running comprises:
sending, by the communication device, the first packet and the third packet when the restarted first timer stops running and the third timer stops running.

31. The method according to claim 30, wherein
the sending, by the communication device, the first packet and the third packet when the restarted first timer stops running and the third timer stops running comprises:

sending, by the communication device, the first packet, the third packet, and a fourth packet when the restarted first timer stops running and the third timer stops running, wherein
the fourth packet is a packet determined by the communication device when the third timer runs, and the fourth packet and the first packet belong to the same PDU set.

32. The method according to claim 30 or 31, wherein the method further comprises:

stopping, by the communication device, the third timer when a second condition is met, wherein
the second condition comprises at least one of the following:

running duration of the third timer is equal to the first interval;
running duration of the third timer is equal to jitter duration;
running duration of the third timer is equal to preset duration; or
the communication device obtains an end marker, wherein the end marker indicates the communication device to stop obtaining a packet in the PDU set to which the first packet belongs.

33. A communication apparatus, comprising a processor and a memory, wherein the processor is coupled to the memory, the memory stores program instructions; and when the program instructions stored in the memory are executed by the processor, the communication apparatus is enabled to perform the method according to any one of claims 1 to 21 or the method according to any one of claims 22 to 32.

34. A chip, comprising a processor and an input/output interface, wherein the input/output interface is configured to receive a signal from an apparatus other than the chip and transmit the signal to the processor, or send a signal from the processor to an apparatus other than the chip; and the processor is configured to implement the method according to any one of claims 1 to 21 or the method according to any one of claims 22 to 32 by using a logic circuit or executing code instructions.

35. A computer-readable storage medium, wherein the computer-readable storage medium stores a computer program, and when the computer program is run on a communication apparatus, the communication apparatus is enabled to perform the method according to any one of claims 1 to 21 or the method according to any one of claims 22 to 32.

FIG. 1

FIG. 2

| Application processor |
| --- |
| Media layer |
| Real-time transport protocol RTP layer |
| Internet protocol IP layer |

FIG. 3

**Modem**

| Control plane | User plane |
| --- | --- |
| Non-access stratum NAS | |
| Radio resource control RRC layer | |
| Service data adaptation protocol SDAP layer | Service data adaptation protocol SDAP layer |
| Packet data convergence protocol PDCP layer | Packet data convergence protocol PDCP layer |
| Radio link control RLC layer | Radio link control RLC layer |
| Media access control MAC layer | Media access control MAC layer |
| Physical PHY layer | Physical PHY layer |

FIG. 4

| Application processor |
| --- |
| Media layer |
| Real-time transport protocol RTP layer |
| Internet protocol IP layer |

| Modem |
| --- |
| Service data adaptation protocol SDAP layer |
| Packet data convergence protocol PDCP layer |
| Radio link control RLC layer |
| Media access control MAC layer |
| Physical PHY layer |

FIG. 5

NG-RAN     5GC

| Terminal device | | Access network device | | UPF network element |
| --- | --- | --- | --- | --- |

PDU session

DRB     NG-U tunnel

QoS flow

QoS flow

DRB

QoS flow

Radio     NG-U

FIG. 6

FIG. 7a

| RTP packet header | | | | | | | | | | | | | | | | | | | | | | | | | | | | | | | |
| --- | --- | --- | --- | --- | --- | --- | --- | --- | --- | --- | --- | --- | --- | --- | --- | --- | --- | --- | --- | --- | --- | --- | --- | --- | --- | --- | --- | --- | --- | --- | --- |
| 0 | | | | | | | | 1 | | | | | | | | 2 | | | | | | | | 3 | | | | | | | |
| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |
| Version | | P | X | CC | | | | M | PT | | | | | | | SN | | | | | | | | | | | | | | | |
| **Timestamp** | | | | | | | | | | | | | | | | | | | | | | | | | | | | | | | |
| SSRC identifier | | | | | | | | | | | | | | | | | | | | | | | | | | | | | | | |
| CSRC identifier | | | | | | | | | | | | | | | | | | | | | | | | | | | | | | | |
| Extension header identifier | | | | | | | | | | | | | | | | Extension header length | | | | | | | | | | | | | | | |

Extension header

| **ID** | L | **S** | **E** | **I** | **D** | 0 | 0 | 0 | 0 |
| --- | --- | --- | --- | --- | --- | --- | --- | --- | --- |

FIG. 7b

**800**

| Terminal device | | Network device |

S801: Determine at least one first packet in first duration, where the first duration is determined based on a first interval

S802: At least one first packet

FIG. 8a

Jitter duration

Bit rate

1st periodicity    2nd periodicity    3rd periodicity    4th periodicity

Application processor

Modem

Time

T1    T2    T3

16.67 ms    16.67 ms    16.67 ms

FIG. 8b

Terminal device | Network device

S803: Start a first timer when a first condition is met

S8011: Determine at least one first packet during running of the first timer, where running duration of the first timer is less than or equal to first duration

S801

S804: Stop the first timer when a second condition is met

S8021: Send the at least one first packet when the first timer stops running

S802

FIG. 9

Terminal device | Network device

S801: Determine at least one first packet in first duration, where the first duration is determined based on a first interval

S802: At least one first packet

S805: Determine at least one second packet during running of a second timer, where running duration of the second timer is less than or equal to the first interval

S806: At least one second packet

S810: Determine at least one third packet during running of a third timer, where running duration of the third timer is less than or equal to the first interval

S811: At least one third packet

FIG. 10

| Terminal device | | Network device |
|---|---|---|

S807: Start a second timer when a third condition is met

S805: Determine at least one second packet during running of the second timer, where running duration of the second timer is less than or equal to a first interval

S808: Stop the second timer when a fourth condition is met

S8061: Send the at least one second packet when the second timer stops running

S806

S809: Determine an SN of a second PDU set based on an SN of a first PDU set

FIG. 11

| Terminal device | | Network device |
|---|---|---|

S812: Start a third timer when a fifth condition is met

S810: Determine at least one third packet during running of the third timer, where running duration of the third timer is less than or equal to a first interval

S813: Stop the third timer when a sixth condition is met

S811

S8111: Send the at least one third packet when the third timer stops running

S814: Determine an SN of a third PDU set based on an SN of a second PDU set

**FIG. 12**

Start

Is a seventh condition met? —— Yes

No

Determine a packet belonging to a same PDU set

S820: A terminal device stops determining a packet belonging to a same PDU set

**FIG. 13**

FIG. 14

Terminal device

Network device

Core network device

S801: Determine at least one first packet in first duration, where the first duration is determined based on a first interval

S802: At least one first packet

S841: Determine a PDU set type of a first PDU set

S841a: Determine the PDU set type of the first PDU set based on a size of the first PDU set

Manner 1

S841b: Determine the PDU set type of the first PDU set based on first information and an obtaining moment of the first PDU set

Manner 2

S841c: Determine the PDU set type of the first PDU set based on second information and an SN of the first PDU set

Manner 3

S841d: Determine the PDU set type of the first PDU set based on third information

Manner 4

FIG. 15

**1600**

Terminal device

Network device

S1601: Determine at least one first packet in first duration, where the first duration is determined based on a first interval

S1602: At least one first packet

FIG. 16a

FIG. 16b

**1700**

FIG. 17a

Jitter
duration

FIG. 17b

Terminal device     Network device

S1707: Start a fourth timer when an eighth condition is met

S1705: Determine at least one fourth packet during running of the fourth timer, where running duration of the fourth timer is less than or equal to first duration

S1708: Stop the fourth timer when a ninth condition is met

S1706: At least one fourth packet

FIG. 18

**1900**

```
┌─────────────────────┐                    ┌─────────────────────┐
│   Terminal device   │                    │   Network device    │
└─────────────────────┘                    └─────────────────────┘
```

S1901: Determine at least one first packet in first duration, where the first duration is determined based on burst duration

S1902: At least one first packet

FIG. 19

**2000**

```
┌─────────────────────┐                    ┌─────────────────────┐
│   Terminal device   │                    │   Network device    │
└─────────────────────┘                    └─────────────────────┘
```

S2001: Determine at least one packet, where the at least one packet belongs to a same PDU set, and an interval between corresponding moments of two adjacent packets in the at least one packet is less than or equal to an interval 1

S2002: At least one packet

FIG. 20a

FIG. 20b

Terminal device                    Network device

```
┌─────────────────────────────────────────────┐
│  S20011: Determine a first packet            │   S2001
└─────────────────────────────────────────────┘
```

S2003a: Start a first timer when the first packet
is obtained, where running duration of the first
timer is less than or equal to an interval 1

S2004a: Stop the first timer when a fourth
condition is met

```
┌─────────────────────────────────────────────┐
│  S20021: Send the first packet when the first │   S2002
│  timer stops running                          │
│                                    ──────────▶│
└─────────────────────────────────────────────┘
```

FIG. 21

Terminal device                    Network device

```
┌─────────────────────────────────────────────┐
│  S20012: Determine a first packet            │   S2001
└─────────────────────────────────────────────┘
```

S2003b: Start a first timer when the first packet
is obtained, where running duration of the first
timer is less than or equal to an interval 1

S2004b: When the running duration of the first
timer is equal to the interval 1, stop the first
timer, and start a second timer

S2005b: Stop the second timer when a first
condition is met

```
┌─────────────────────────────────────────────┐
│  S20022: Send the first packet when the       │   S2002
│  first timer stops running, and the second    │
│  timer stops running                          │
│                                    ──────────▶│
└─────────────────────────────────────────────┘
```

FIG. 22

| Terminal device | | Network device |
|---|---|---|

S20013: Determine a first packet when a second timer does not run — S2001

S2003c: Start a first timer when the first packet is obtained, where running duration of the first timer is less than or equal to an interval 1

S2004c: When the running duration of the first timer is equal to the interval 1, stop the first timer, and start the second timer

S2005c: Determine a second packet during running of the second timer — S2001

S2006c: Stop the second timer when a first condition is met

S20023: Send the first packet and the second packet when the first timer stops running, and the second timer stops running — S2002

FIG. 23

```
┌─────────────────┐                    ┌─────────────────┐
│ Terminal device │                    │ Network device  │
└─────────────────┘                    └─────────────────┘
```

┌───────────────────────────────────────────────┐  S2001
│  S200141: Determine a first packet             │
└───────────────────────────────────────────────┘

┌───────────────────────────────────────────────┐
│  S2003d: Start a first timer when the first packet │
│  is obtained, where running duration of the first │
│  timer is less than or equal to an interval 1  │
└───────────────────────────────────────────────┘

┌───────────────────────────────────────────────┐  S2001
│  S200142: Determine a third packet             │
└───────────────────────────────────────────────┘

┌───────────────────────────────────────────────┐
│  S2004d: Restart the first timer at a third moment │
└───────────────────────────────────────────────┘

┌───────────────────────────────────────────────┐
│  S2005d: The terminal device stops the first timer │
│  when a fourth condition is met                │
└───────────────────────────────────────────────┘

┌───────────────────────────────────────────────┐  S2002
│  S20024: Send the first packet and the         │
│  third packet when the restarted first         │
│  timer stops running                           │
└───────────────────────────────────────────────┘

FIG. 24

| Terminal device | | Network device |
|---|---|---|

S2001

S200151: Determine a first packet

S2003e: Start a first timer when the first packet is obtained, where running duration of the first timer is less than or equal to an interval 1

S2001

S200152: Determine a third packet

S2004e: Restart the first timer at a third moment

S2005e: When the running duration of the first timer is equal to the interval 1, stop the first timer, and start a third timer

S2006e: Stop the third timer when a second condition is met

S2002

S20025: Send the first packet and the third packet when the first timer stops running, and the third timer stops running

FIG. 25

Terminal device                                    Network device

S2001
S200161: Determine a first packet

S2003f: Start a first timer when the first packet is obtained, where running duration of the first timer is less than or equal to an interval 1

S2001
S200162: Determine a third packet

S2004f: Restart the first timer at a third moment

S2005f: When the running duration of the first timer is equal to the interval 1, stop the first timer, and start a third timer

S2001
S2006f: Determine a fourth packet during running of the third timer

S2007f: Stop the third timer when a second condition is met

S2002
S20026: Send the first packet, the third packet, and the fourth packet when the restarted first timer stops running, and the third timer stops running

FIG. 26

**2700**

```
┌─────────────────────┐                    ┌─────────────────────┐
│   Terminal device   │                    │   Network device    │
└─────────────────────┘                    └─────────────────────┘
```

S2701: Determine at least one packet, where the at least one packet belongs to a same PDU set, and an interval between moments corresponding to two adjacent packets in the at least one packet is less than or equal to an interval 1

S2702: At least one packet

FIG. 27

Fuzzy zone

a b   c d

PDU set 1          PDU set 2

FIG. 28

Communication apparatus **2900**

Storage unit **2904**

Receiving unit **2903**

Processing unit **2901**

Sending unit **2902**

FIG. 29

Communication apparatus **3000**

Communication interface **3002**

Processor **3001**

Memory **3003**

3004

FIG. 30

<table>
<tr><td colspan="2">INTERNATIONAL SEARCH REPORT</td><td>International application No.<br><br>**PCT/CN2023/095147**</td></tr>
</table>

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

CJFD, CNABS, CNTXT, ENTXTC, WPABS, WPABSC: 报文, 定时器, 发送, 集合, 间隔, 时长, 时间, 视频, 视频帧, 数据包, 数据帧, 突发, 序列号, 帧, AR, PDU, SET, SN, VR, XR, message, timer, send, interval, duration, time, video, video frame, packet, data frame, burst, sequence number, frame

**C. DOCUMENTS CONSIDERED TO BE RELEVANT**

| Category* | Citation of document, with indication, where appropriate, of the relevant passages | Relevant to claim No. |
|---|---|---|
| X | CN 114024914 A (HANGZHOU HIKVISION DIGITAL TECHNOLOGY CO., LTD.) 08 February 2022 (2022-02-08) description, pp. 3-16 | 1-35 |
| X | WO 2021244218 A1 (HUAWEI TECHNOLOGIES CO., LTD.) 09 December 2021 (2021-12-09) description, pp. 8-15 | 1-35 |
| A | CN 112087398 A (XI'AN VANXVM ELECTRONICS TECHNOLOGY CO., LTD.) 15 December 2020 (2020-12-15) entire document | 1-35 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 August 2023** | **09 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/095147**

| Patent document cited in search report | | | Publication date (day/month/year) | Patent family member(s) | | | Publication date (day/month/year) |
|---|---|---|---|---|---|---|---|
| CN | 114024914 | A | 08 February 2022 | None | | | |
| WO | 2021244218 | A1 | 09 December 2021 | CN | 113766567 | A | 07 December 2021 |
| CN | 112087398 | A | 15 December 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210577186